# EUROPEAN PATENT APPLICATION

(11) **EP 3 713 326 A1**
(43) Date of publication of application: **23.09.2020**
(21) Application number: 17932051.0
(22) Date of filing: 17.11.2017
(51) Int. Cl.: H04W 72/04

(54) **COMMUNICATION METHOD AND DEVICE**

(71) Applicant: Huawei Technologies Co., Ltd., Longgang District Shenzhen, Guangdong 518129 (CN)
(72) Inventor: TANG, Xun, Shenzhen Guangdong 518129 (CN); ZHANG, Jian, Shenzhen Guangdong 518129 (CN); CHAI, Li, Shenzhen Guangdong 518129 (CN); MIAO, Jinhua, Shenzhen Guangdong 518129 (CN)
(74) Representative: Maiwald Patent- und Rechtsanwaltsgesellschaft mbH
(86) International application number: PCT/CN2017/111738
(87) International publication number: WO 2019/095321

(57) **Abstract**

A communications method and apparatus are provided, to reduce uplink/downlink interference, thereby helping promote drone-like communication application in a cellular network. The method includes: receiving, by a terminal, first resource configuration information that is sent by a first station and that is of transmission resources allocated to the terminal. The transmission resources include a common resource and one or more dedicated resources, the common resource is used by the first station and at least one second station to jointly send a same signal to the terminal, and the dedicated resource is used by one of the at least one second station and the first station to independently send a signal to the terminal.

## Description

### TECHNICAL FIELD

This application relates to the field of communications technologies, and especially, to a communications method and apparatus.

### BACKGROUND

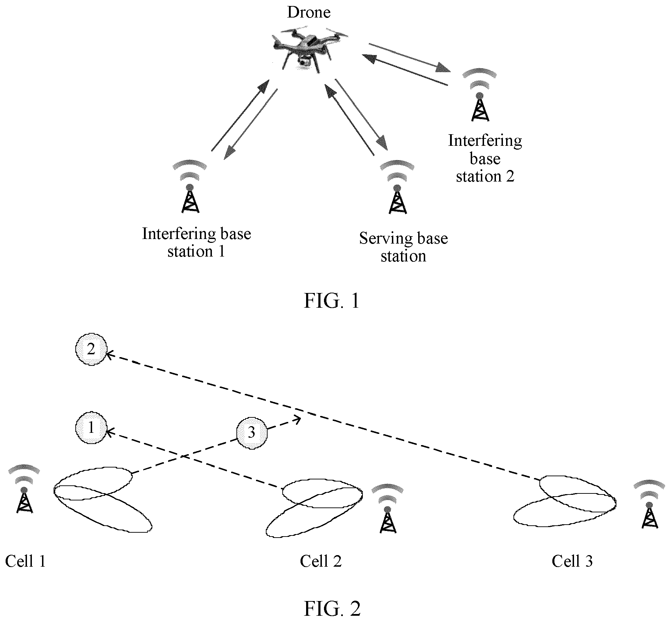

A cellular communications system is initially designed mainly for a ground terminal. When a height of a terminal is higher than a height of a base station, interference increases and frequent handovers occur. For example, the terminal is a drone. When a flight height of the drone is higher than the height of the base station, the following problems are caused when the drone accesses a cellular network for communication. First, because a base station signal mainly radiates towards the ground, although some signals are diffused to the air due to ground signal reflection or scattering, or some side lobes of a base station antenna radiate to the air, generally strength of a signal received by the drone is relatively low. Second, when the drone is flying at a high altitude, because fewer obstacles exist, a signal sent by the drone can be received by more base stations, and the drone can receive signals from more base stations. Consequently, interference increases in both an uplink direction and a downlink direction. As shown in FIG. 1, when a high-altitude drone communicates with a serving base station, a signal sent by the drone may be received by the serving base station, an interfering base station 1, and an interfering base station 2, and signals sent by the serving base station, the interfering base station 1, and the interfering base station 2 may be received by the drone. Third, because the side lobes of the base station antenna that radiate to the air have a relatively small coverage area, a small-scale movement of the drone causes a handover, and in addition to a horizontal movement, a height change of the drone also causes a handover. As shown in FIG. 2, a horizontal movement (from a location 1 to a location 3) of the drone causes a handover from a cell 2 to a cell 1, and a vertical movement (from the location 1 to a location 2) of the drone causes a handover from the cell 2 to a cell 3. In conclusion, quality of a downlink signal received by the drone deteriorates, more handovers are caused due to aerial flight of the drone, and consequently communication performance of the drone deteriorates.

Currently, to resolve the foregoing problems, a solution is proposed: A plurality of base stations coordinate with each other to perform joint reception and/or transmission of a signal for a drone on a same time-frequency resource. This reduces co-channel interference to the drone in a downlink direction and an uplink direction to some extent. In addition, a plurality of cells of the plurality of base stations constitute a new cell. The new cell may also be referred to as a virtual cell, and a coverage area of the virtual cell is a sum of coverage areas of the plurality of cells. This reduces a handover frequency of the drone to some extent. However, to implement this solution, the plurality of base stations that coordinate with each other need to have an ideal backhaul (ideal backhaul). If the plurality of base stations that coordinate with each other have a non-ideal backhaul, the plurality of base stations need to perform long-time scheduling and data coordination, so that joint reception and/or transmission of a signal can be performed for the drone.

In conclusion, in the existing solution, when a plurality of base stations perform joint reception and/or transmission of a signal for a terminal, the plurality of base stations need to perform long-time scheduling and data coordination, and consequently a data transmission delay requirement of the terminal cannot be met.

### SUMMARY

This application provides a communications method and apparatus, to resolve a problem that a data transmission delay requirement of a terminal cannot be met because a plurality of base stations need to perform long-time scheduling and data coordination when the plurality of base stations perform joint reception and/or transmission of a signal for the terminal.

According to a first aspect, a communications method is provided. A terminal receives first resource configuration information sent by a first station.

The terminal determines, based on the first resource configuration information, transmission resources indicated by the first resource configuration information. The transmission resources may be virtual cell transmission resources or virtual cell resources. The transmission resources include a common resource and one or more dedicated resources, the common resource is used by the first station and at least one second station to jointly send a same signal to the terminal, and the dedicated resource is used by one of the at least one second station and the first station to independently send a signal to the terminal. Therefore, the terminal may perform receiving or sending of some data with a low transmission delay requirement for a plurality of stations on the common resource, and perform independent receiving or sending of some data with a relatively high transmission delay requirement for a single station on the dedicated resource. Because the terminal performs data receiving or sending for the single station on the dedicated resource, uplink/downlink interference is reduced, thereby helping promote drone-like communication application in a cellular network.

In a possible design, the first station is one base station, or a set or a combination of a plurality of base stations having an ideal backhaul, and the second station is one base station, or a set or a combination of a plurality of base stations having an ideal backhaul.

In a possible design, the common resource is used to transmit at least one of a synchronization channel, a control channel, a data channel, a reference signal, or a broadcast channel; and the dedicated resource is used to transmit at least one of a synchronization channel, a control channel, a data channel, and a reference signal. The reference signal may be a reference signal used for measurement, or a reference signal used for demodulation.

In a possible design, the terminal receives, on the common resource, a signal jointly sent by the first station and the at least one second station; or the terminal receives, on the dedicated resource, a signal independently sent by one of the at least one second station and the first station.

In a possible design, the first resource configuration information includes resource locations of the transmission resources, the common resource, and the one or more dedicated resource, the resource location includes a time domain location and/or a frequency domain location, the time domain location includes at least two of a start location, a length, a period, an offset, and an end location in time domain, and the frequency domain location includes at least two of a start location, a bandwidth, and an end location in frequency domain.

In a possible design, the start location and the end location in time domain each may be represented by using a frame number, a subframe number, and/or a symbol index; and the start location and the end location in frequency domain each may be represented by using a resource block location or a resource element location.

In a possible design, the first resource configuration information includes L physical cell identifier PCI lists, L is a positive integer, and one station corresponds to at least one PCI list. The terminal determines N cells in a PCI list corresponding to a to-be-measured station, and measures cell signal quality of the N cells to obtain N pieces of cell signal quality, where N is a positive integer. The terminal determines station signal quality based on the N pieces of obtained cell signal quality, and sends the station signal quality to the first station.

In a possible design, the cell signal quality is a layer 1 filtering result or a layer 3 filtering result.

In a possible design, if one station corresponds to one PCI list, the terminal determines that a highest value in the N pieces of cell signal quality is the station signal quality of the to-be-measured station; or the terminal determines that an average or a sum of the first M values sorted in the N pieces of cell signal quality in descending order is the station signal quality of the to-be-measured station, where M ≤ N, and M is a positive integer; or the terminal determines that an average or a sum of M' values that each are greater than a first threshold in the N pieces of cell signal quality is the station signal quality of the to-be-measured station, where M' ≤ N, and M' is a positive integer; or the terminal determines that a sum of the N pieces of cell signal quality is the station signal quality of the to-be-measured station. Alternatively, if one station corresponds to at least two PCI lists, the terminal determines subsignal quality of each PCI list, and adds all obtained subsignal quality to obtain the station signal quality, where the subsignal quality is a highest value in n pieces of cell signal quality, where n is a positive integer; or the subsignal quality is an average or a sum of the first m values sorted in n pieces of cell signal quality in descending order, where m ≤ n, and m is a positive integer; or the subsignal quality is an average or a sum of m' values that each are greater than a first threshold in the n pieces of cell signal quality, where m' ≤ n, and m' is a positive integer; or the subsignal quality is a sum of the n pieces of cell signal quality; and the n pieces of cell signal quality represent signal quality of n cells in one PCI list.

In a possible design, the terminal receives measurement configuration information sent by the first station, where the measurement configuration information includes an event-triggered reporting manner or a periodic reporting manner, and an event in the event-triggered reporting manner is: station signal quality of a neighboring station is greater than station signal quality of a serving station by one offset, or station signal quality of a serving station is less than a second threshold; and the terminal sends the station signal quality to the first station based on the measurement configuration information when determining that a measurement reporting condition is met.

According to the foregoing station signal measurement method, the terminal reports station signal quality, so that the first station can be assisted in selecting a data transmission station with an optimal channel condition to serve the terminal.

In a possible design, the transmission resources constitute a first virtual cell, the first virtual cell includes a plurality of cells, and a cell of the first station and a cell of the at least one second stations are included in the plurality of cells. Some or all same time-frequency resources reserved by the plurality of cells are used as the transmission resources. The first station sends a same downlink synchronization signal on the same time-frequency resources, to constitute the first virtual cell. The terminal can obtain a physical cell identifier PCI of the first virtual cell by detecting the downlink synchronization signal. The terminal receives a handover command sent by the first station, where the handover command includes second resource configuration information of transmission resources constituting a second virtual cell. The terminal hands over from the first virtual cell to the second virtual cell according to the handover command, where the transmission resources constituting the second virtual cell include a common resource used by a third station and at least one fourth station to jointly send a same signal to the terminal, and a dedicated resource used by one of the at least one fourth station and the third station to independently send a signal to the terminal.

In a possible design, the second resource configuration information includes resource locations of the transmission resources constituting the second virtual cell, and resource locations of the common resource and the dedicated resource in the transmission resources constituting the second virtual cell.

In a possible design, the terminal receives, on the common resource, a target data transmission station indicated by the first station, and receives downlink data at a resource location occupied by the target data transmission station, where the target data transmission station is the first station or the second station; or the terminal detects downlink scheduling information on the common resource and the dedicated resource, and receives downlink data based on the detected downlink scheduling information at a resource location indicated by the downlink scheduling information; or the terminal detects uplink scheduling information on the common resource and the dedicated resource, and sends uplink data based on the detected uplink scheduling information at a resource location indicated by the uplink scheduling information.

According to a second aspect, a communications method is provided. A first station sends, to a terminal, first resource configuration information of transmission resources allocated to the terminal. The transmission resources may be virtual cell transmission resources or virtual cell resources. The transmission resources include a common resource and one or more dedicated resources, the common resource is used by the first station and at least one second station to jointly send a same signal to the terminal, and the dedicated resource is used by one of the at least one second station and the first station to independently send a signal to the terminal. Therefore, a plurality of stations may jointly receive or send some data with a low transmission delay requirement on the common resource, and a single station may receive or send some data with a relatively high transmission delay requirement on the dedicated resource. Because the single station independently occupies the dedicated resource to receive or send data, uplink/downlink interference is reduced, thereby helping promote drone-like communication application in a cellular network. In addition, because the single station occupies the dedicated resource to receive or send data, a coordination delay between the plurality of stations is avoided, thereby helping reduce a signal receiving or sending delay.

In a possible design, the first station is one base station, or a set or a combination of a plurality of base stations having an ideal backhaul, and the second station is one base station, or a set or a combination of a plurality of base stations having an ideal backhaul.

In a possible design, the common resource is used to transmit at least one of a synchronization channel, a control channel, a data channel, a reference signal, and a broadcast channel; and the dedicated resource is used to transmit at least one of a synchronization channel, a control channel, a data channel, and a reference signal. The reference signal may be a reference signal used for measurement, or a reference signal used for demodulation.

In a possible design, the first resource configuration information includes resource locations of the transmission resources, the common resource, and the one or more dedicated resource, the resource location includes a time domain location and/or a frequency domain location, the time domain location includes at least two of a start location, a length, a period, an offset, and an end location in time domain, and the frequency domain location includes at least two of a start location, a bandwidth, and an end location in frequency domain.

In a possible design, the start location and the end location in time domain each may be represented by using a frame number, a subframe number, and/or a symbol index; and the start location and the end location in frequency domain each may be represented by using a resource block location or a resource element location.

In a possible design, the first resource configuration information includes L physical cell identifier PCI lists, L is a positive integer, and one station corresponds to at least one PCI list. The first station receives station signal quality reported by the terminal, where the station signal quality is determined based on N pieces of cell signal quality, the N pieces of cell signal quality represent signal quality of N cells in at least one PCI list corresponding to one station, and N is a positive integer.

In a possible design, the cell signal quality is a layer 1 filtering result or a layer 3 filtering result.

In a possible design, if one station corresponds to one PCI list, the station signal quality is a highest value in the N pieces of cell signal quality; or the station signal quality is an average or a sum of the first M values sorted in the N pieces of cell signal quality in descending order, where M ≤ N, and M is a positive integer; or the station signal quality is an average or a sum of M' values that each are greater than a first threshold in the N pieces of cell signal quality, where M' ≤ N, and M' is a positive integer; or the station signal quality is a sum of the N pieces of cell signal quality. Alternatively, if one station corresponds to at least two PCI lists, the station signal quality is a sum of subsignal quality of the at least two PCI lists, where the subsignal quality is a highest value in n pieces of cell signal quality, where n is a positive integer; or the subsignal quality is an average or a sum of the first m values sorted in n pieces of cell signal quality in descending order, where m ≤ n, and m is a positive integer; or the subsignal quality is an average or a sum of m' values that each are greater than a first threshold in the n pieces of cell signal quality, where m' ≤ n, and m' is a positive integer; or the subsignal quality is a sum of the n pieces of cell signal quality; and the n pieces of cell signal quality represent signal quality of n cells in one PCI list.

In a possible design, before the first station receives the station signal quality reported by the terminal, the first station sends measurement configuration information to the terminal, where the measurement configuration information includes an event-triggered reporting manner or a periodic reporting manner, and an event in the event-triggered reporting manner is: station signal quality of a neighboring station is greater than station signal quality of a serving station by one offset, or site signal quality of a serving station is less than a second threshold.

In a possible design, after the first station receives the station signal quality reported by the terminal, the first station determines a target data transmission station of the terminal based on the received station signal quality; and if the target data transmission station is the first station, the first station sends data to the terminal at a specified time domain location; or if the target data transmission station is the second station, the first station instructs the target data transmission station to send data to the terminal at a specified time domain location.

In a possible design, the specified time domain location is in a form of a combination of a frame number and a subframe number.

In a possible design, the first station sends a downlink packet data convergence protocol PDCP protocol data unit PDU to the second station, so that the second station sends the received downlink PDCP PDU to the terminal; or the first station receives an uplink PDCP PDU of the terminal sent by the second station.

In a possible design, the first station and the at least one second station jointly send the downlink PDCP PDU to the terminal on the common resource; or one of the first station and the at least one second station independently sends the downlink PDCP PDU to the terminal on the dedicated resource. Alternatively, the first station and the at least one second station jointly receive, on the common resource, the uplink PDCP PDU sent by the terminal; or one of the first station and the at least one second station independently receives, on the dedicated resource, the uplink PDCP PDU sent by the terminal.

In a possible design, a cell of the first station and a cell of the at least one second station are included in a first virtual cell that serves the terminal. When an inter-virtual cell handover condition is met, the first station sends a handover command to the terminal, to instruct the terminal to hand over from the first virtual cell to a second virtual cell, where the handover command includes second resource configuration information of transmission resources constituting the second virtual cell, and the transmission resources constituting the second virtual cell include a common resource used by a third station and at least one fourth station to jointly send a same signal to the terminal, and a dedicated resource used by one of the at least one fourth station and the third station to independently send a signal to the terminal.

In a possible design, the second resource configuration information includes resource locations of the transmission resources constituting the second virtual cell, and resource locations of the common resource and the dedicated resource in the transmission resources constituting the second virtual cell.

According to a third aspect, a communications method is provided. A first station receives station signal quality reported by a terminal, where the station signal quality is used to represent radio signal strength of the first station and/or at least one second station, and a cell of the first station and a cell of the at least one second station are included in a first virtual cell that serves the terminal. The first station determines a target data transmission station of the terminal based on the received station signal quality; and if the target data transmission station is the first station, the first station sends data to the terminal at a specified time domain location; or if the target data transmission station is the second station, the first station instructs the target data transmission station to send data to the terminal at a specified time domain location. In this way, the first station may select, based on the station signal quality reported by the terminal, a data transmission station with an optimal channel condition for the terminal to serve the terminal.

In a possible design, the specified time domain location is in a form of a combination of a frame number and a subframe number.

In a possible design, the first station is one base station, or a set or a combination of a plurality of base stations having an ideal backhaul, and the second station is one base station, or a set or a combination of a plurality of base stations having an ideal backhaul.

In a possible design, transmission resources constituting the first virtual cell include a common resource and one or more dedicated resources. The transmission resources may be virtual cell transmission resources or virtual cell resources. The common resource is used by the first station and the at least one second station to jointly send a same signal to the terminal, and the dedicated resource is used by one of the at least one second station and the first station to independently send a signal to the terminal. The first station sends first resource configuration information of the transmission resources to the terminal. In this way, a plurality of stations may jointly receive or send some data with a low transmission delay requirement on the common resource, and a single station independently receives or sends some data with a relatively high transmission delay requirement on the dedicated resource. Because the single station independently occupies the dedicated resource to receive or send data, uplink/downlink interference is reduced, thereby helping promote drone-like communication application in a cellular network. In addition, because the single station occupies the dedicated resource to receive or send data, a coordination delay between the plurality of stations is avoided, thereby helping reduce a signal receiving or sending delay.

In a possible design, the common resource is used to transmit at least one of a synchronization channel, a control channel, a data channel, a reference signal, and a broadcast channel; and the dedicated resource is used to transmit at least one of a synchronization channel, a control channel, a data channel, and a reference signal. The reference signal may be a reference signal used for measurement, or a reference signal used for demodulation.

In a possible design, the first resource configuration information includes resource locations of the transmission resources, the common resource, and the one or more dedicated resource, the resource location includes a time domain location and/or a frequency domain location, the time domain location includes at least two of a start location, a length, a period, an offset, and an end location in time domain, and the frequency domain location includes at least two of a start location, a bandwidth, and an end location in frequency domain.

In a possible design, the start location and the end location in time domain each may be represented by using a frame number, a subframe number, and/or a symbol index; and the start location and the end location in frequency domain each may be represented by using a resource block location or a resource element location.

In a possible design, before the first station receives the station signal quality reported by the terminal, the method further includes:
sending, by the first station, L physical cell identifier PCI lists to the terminal, where L is a positive integer, and one station corresponds to at least one PCI list.

The station signal quality is determined based on N pieces of cell signal quality, the N pieces of cell signal quality represent signal quality of N cells in at least one PCI list corresponding to one station, and N is a positive integer.

In a possible design, the cell signal quality is a layer 1 filtering result or a layer 3 filtering result.

In a possible design, if one station corresponds to one PCI list, the station signal quality is a highest value in the N pieces of cell signal quality; or the station signal quality is an average or a sum of the first M values sorted in the N pieces of cell signal quality in descending order, where M ≤ N, and M is a positive integer; or the station signal quality is an average or a sum of M' values that each are greater than a first threshold in the N pieces of cell signal quality, where M' ≤ N, and M' is a positive integer; or the station signal quality is a sum of the N pieces of cell signal quality. Alternatively, if one station corresponds to at least two PCI lists, the station signal quality is a sum of subsignal quality of the at least two PCI lists, where the subsignal quality is a highest value in n pieces of cell signal quality, where n is a positive integer; or the subsignal quality is an average or a sum of the first m values sorted in n pieces of cell signal quality in descending order, where m ≤ n, and m is a positive integer; or the subsignal quality is an average or a sum of m' values that each are greater than a first threshold in the n pieces of cell signal quality, where m' ≤ n, and m' is a positive integer; or the subsignal quality is a sum of the n pieces of cell signal quality; and the n pieces of cell signal quality represent signal quality of n cells in one PCI list.

In a possible design, before the first station receives the station signal quality reported by the terminal, the first station sends measurement configuration information to the terminal, where the measurement configuration information includes an event-triggered reporting manner or a periodic reporting manner, and an event in the event-triggered reporting manner is: station signal quality of a neighboring station is greater than station signal quality of a serving station by one offset, or station signal quality of a serving station is less than a second threshold.

In a possible design, the first station sends a downlink packet data convergence protocol PDCP protocol data unit PDU to the second station, so that the second station sends the received downlink PDCP PDU to the terminal; or the first station receives an uplink PDCP PDU of the terminal sent by the second station.

In a possible design, when an inter-virtual cell handover condition is met, the first station sends a handover command to the terminal, to instruct the terminal to hand over from the first virtual cell to a second virtual cell, where the handover command includes second resource configuration information of transmission resources constituting the second virtual cell, and the transmission resources constituting the second virtual cell include a common resource used by a third station and at least one fourth station to jointly send a same signal to the terminal, and a dedicated resource used by one of the at least one fourth station and the third station to independently send a signal to the terminal.

In a possible design, the second resource configuration information includes resource locations of the transmission resources constituting the second virtual cell, and resource locations of the common resource and the dedicated resource in the transmission resources constituting the second virtual cell.

According to a fourth aspect, a communications method is provided. A terminal measures station signal quality of a to-be-measured station, where the station signal quality is used to represent radio signal strength of a first station and/or at least one second station, and a cell of the first station and a cell of the at least one second station are included in a first virtual cell that serves the terminal. The terminal sends the measured station signal quality to the first station. In this way, the terminal reports the station signal quality, so that the first station can be assisted in selecting a data transmission station with an optimal channel condition to serve the terminal.

In a possible design, the transmission resources constituting the first virtual cell include a common resource and one or more dedicated resources, the common resource is used by the first station and the at least one second station to jointly send a same signal to the terminal, and the dedicated resource is used by one of the at least one second station and the first station to independently send a signal to the terminal. The terminal receives first resource configuration information of the transmission resources sent by the first station. Therefore, the terminal may perform receiving or sending of some data with a low transmission delay requirement for a plurality of stations on the common resource, and perform independent receiving or sending of some data with a relatively high transmission delay requirement for a single station on the dedicated resource. Because the terminal performs data receiving or sending for the single station on the dedicated resource, uplink/downlink interference is reduced, thereby helping promote drone-like communication application in a cellular network.

In a possible design, the common resource is used to transmit at least one of a synchronization channel, a control channel, a data channel, a reference signal, and a broadcast channel; and the dedicated resource is used to transmit at least one of a synchronization channel, a control channel, a data channel, and a reference signal. The reference signal may be a reference signal used for measurement, or a reference signal used for demodulation.

In a possible design, the first resource configuration information includes resource locations of the transmission resources, the common resource, and the one or more dedicated resource, the resource location includes a time domain location and/or a frequency domain location, the time domain location includes at least two of a start location, a length, a period, an offset, and an end location in time domain, and the frequency domain location includes at least two of a start location, a bandwidth, and an end location in frequency domain.

In a possible design, the start location and the end location in time domain each may be represented by using a frame number, a subframe number, and/or a symbol index; and the start location and the end location in frequency domain each may be represented by using a resource block location or a resource element location.

In a possible design, the terminal measures the station signal quality of the to-be-measured station in the following manner: The terminal receives L physical cell identifier PCI lists sent by the first station, where L is a positive integer, and any one of the at least one second station and the first station corresponds to at least one PCI list. The terminal determines N cells in a PCI list corresponding to a to-be-measured station, and measures cell signal quality of the N cells to obtain N pieces of cell signal quality, where N is a positive integer. The terminal determines the station signal quality based on the N pieces of obtained cell signal quality, and sends the station signal quality to the first station.

In a possible design, the cell signal quality is a layer 1 filtering result or a layer 3 filtering result.

In a possible design, if one station corresponds to one PCI list, the terminal determines that a highest value in the N pieces of cell signal quality is the station signal quality of the to-be-measured station; or the terminal determines that an average or a sum of the first M values sorted in the N pieces of cell signal quality in descending order is the station signal quality of the to-be-measured station, where M ≤ N, and M is a positive integer; or the terminal determines that an average or a sum of M' values that each are greater than a first threshold in the N pieces of cell signal quality is the station signal quality of the to-be-measured station, where M' ≤ N, and M' is a positive integer; or the terminal determines that a sum of the N pieces of cell signal quality is the station signal quality of the to-be-measured station. Alternatively, if one station corresponds to at least two PCI lists, the terminal determines subsignal quality of each PCI list, and adds all obtained subsignal quality to obtain the station signal quality, where the subsignal quality is a highest value in n pieces of cell signal quality, where n is a positive integer; or the subsignal quality is an average or a sum of the first m values sorted in n pieces of cell signal quality in descending order, where m ≤ n, and m is a positive integer; or the subsignal quality is an average or a sum of m' values that each are greater than a first threshold in the n pieces of cell signal quality, where m' ≤ n, and m' is a positive integer; or the subsignal quality is a sum of the n pieces of cell signal quality; and the n pieces of cell signal quality represent signal quality of n cells in one PCI list.

In a possible design, the common resource further includes a dedicated pilot resource allocated to each station. The terminal may further measure the station signal quality of the to-be-measured station in the following manner: The terminal measures a dedicated pilot signal on a dedicated pilot resource of the to-be-measured station in the common resource, and obtains the station signal quality based on the measured dedicated pilot signal.

In a possible design, before the terminal measures the station signal quality of the to-be-measured station, the terminal receives measurement configuration information sent by the first station, where the measurement configuration information includes an event-triggered reporting manner or a periodic reporting manner, and an event in the event-triggered reporting manner is: station signal quality of a neighboring station is greater than station signal quality of a serving station by one offset, or station signal quality of a serving station is less than a second threshold.

In a possible design, the terminal receives, on the common resource, information about a target data transmission station indicated by the first station, in other words, information that indicates a specific station serving as the target data transmission station of the terminal. The terminal receives downlink data at a resource location occupied by the target data transmission station; or the terminal detects downlink scheduling information on the common resource and the dedicated resource, and receives downlink data based on the detected downlink scheduling information at a resource location indicated by the downlink scheduling information. The target data transmission station is the first station or the second station. In an uplink direction, the terminal detects uplink scheduling information on the common resource and the dedicated resource, and sends uplink data based on the detected uplink scheduling information at a resource location indicated by the uplink scheduling information.

In a possible design, the terminal receives a handover command sent by the first station, where the handover command includes second resource configuration information of transmission resources constituting a second virtual cell; and the terminal hands over from the first virtual cell to the first virtual cell according to the handover command, where the transmission resources constituting the second virtual cell include a common resource used by a third station and at least one fourth station to jointly send a same signal to the terminal, and a dedicated resource used by one of the at least one fourth station and the third station to independently send a signal to the terminal.

In a possible design, the second resource configuration information includes resource locations of the transmission resources constituting the second virtual cell, and resource locations of the common resource and the dedicated resource in the transmission resources constituting the second virtual cell.

According to a fifth aspect, a communications method is provided. A first station receives virtual cell signal quality reported by a terminal. The first station sends a handover command to the terminal, to instruct the terminal to hand over from a first virtual cell to a second virtual cell. First transmission resources constituting the first virtual cell include a first common resource used by the first station and at least one second station to jointly send a same signal to the terminal, and one or more first dedicated resources used by one of the at least one second station and the first station to independently send a signal to the terminal. Second transmission resources constituting the second virtual cell include a second common resource used by a third station and at least one fourth station to jointly send a same signal to the terminal, and one or more second dedicated resources used by one of the at least one fourth station and the third station to independently send a signal to the terminal. The handover command includes resource locations of the second transmission resources, the second common resource, and the second dedicated resource. Therefore, a plurality of stations may jointly receive or send some data with a low transmission delay requirement on a common resource, and a single station independently receives or sends some data with a relatively high transmission delay requirement on a dedicated resource. Because the single station independently occupies the dedicated resource to receive or send data, uplink/downlink interference is reduced, thereby helping promote drone-like communication application in a cellular network. In addition, because the single station occupies the dedicated resource to receive or send data, a coordination delay between the plurality of stations is avoided, thereby helping reduce a signal receiving or sending delay.

In a possible design, the first station, the second station, the third station, and the fourth station each are one base station, or a set or a combination of a plurality of base stations having an ideal backhaul.

In a possible design, the first common resource and the second common resource each are used to transmit at least one of a synchronization channel, a control channel, a data channel, a reference signal, and a broadcast channel. The first dedicated resource and the second dedicated resource each are used to transmit at least one of a synchronization channel, a control channel, a data channel, and a reference signal. The reference signal may be a reference signal used for measurement, or a reference signal used for demodulation.

In a possible design, before the first station receives the virtual cell signal quality reported by the terminal, the first station sends first resource configuration information of the first transmission resources to the terminal. The first resource configuration information includes resource locations of the first transmission resources, the first common resource, and the first dedicated resource. The resource location includes a time domain location and/or a frequency domain location, the time domain location includes at least two of a start location, a length, a period, an offset, and an end location in time domain, and the frequency domain location includes at least two of a start location, a bandwidth, and an end location in frequency domain.

In a possible design, the start location and the end location in time domain each may be represented by using a frame number, a subframe number, and/or a symbol index; and the start location and the end location in frequency domain each may be represented by using a resource block location or a resource element location.

In a possible design, the first resource configuration information includes L physical cell identifier PCI lists, L is a positive integer, and one station corresponds to at least one PCI list. The first station receives station signal quality reported by the terminal, where the station signal quality is determined based on N pieces of cell signal quality, the N pieces of cell signal quality represent signal quality of N cells in at least one PCI list corresponding to one station, and N is a positive integer.

In a possible design, the cell signal quality is a layer 1 filtering result or a layer 3 filtering result.

In a possible design, if one station corresponds to one PCI list, the station signal quality is a highest value in the N pieces of cell signal quality; or the station signal quality is an average or a sum of the first M values sorted in the N pieces of cell signal quality in descending order, where M ≤ N, and M is a positive integer; or the station signal quality is an average or a sum of M' values that each are greater than a first threshold in the N pieces of cell signal quality, where M' ≤ N, and M' is a positive integer; or the station signal quality is a sum of the N pieces of cell signal quality. Alternatively, if one station corresponds to at least two PCI lists, the station signal quality is a sum of subsignal quality of the at least two PCI lists, where the subsignal quality is a highest value in n pieces of cell signal quality, where n is a positive integer; or the subsignal quality is an average or a sum of the first m values sorted in n pieces of cell signal quality in descending order, where m ≤ n, and m is a positive integer; or the subsignal quality is an average or a sum of m' values that each are greater than a first threshold in the n pieces of cell signal quality, where m' ≤ n, and m' is a positive integer; or the subsignal quality is a sum of the n pieces of cell signal quality; and the n pieces of cell signal quality represent signal quality of n cells in one PCI list.

In a possible design, before the first station receives the station signal quality reported by the terminal, the first station sends measurement configuration information to the terminal, where the measurement configuration information includes an event-triggered reporting manner or a periodic reporting manner, and an event in the event-triggered reporting manner is: station signal quality of a neighboring station is greater than station signal quality of a serving station by one offset, or station signal quality of a serving station is less than a second threshold.

In a possible design, after the first station receives the station signal quality reported by the terminal, the first station determines a target data transmission station of the terminal based on the received station signal quality; and if the target data transmission station is the first station, the first station sends data to the terminal at a specified time domain location; or if the target data transmission station is the second station, the first station instructs the target data transmission station to send data to the terminal at a specified time domain location.

In this way, the first station may select, based on the station signal quality reported by the terminal, a data transmission station with an optimal channel condition for the terminal to serve the terminal.

Optionally, the specified time domain location is in a form of a combination of a frame number and a subframe number.

In a possible design, the first station sends a downlink packet data convergence protocol PDCP protocol data unit PDU to the second station, so that the second station sends the received downlink PDCP PDU to the terminal; or the first station receives an uplink PDCP PDU of the terminal sent by the second station.

According to a sixth aspect, a communications method is provided, and the method includes the following steps: A terminal sends virtual cell signal quality to a first station; the terminal receives a handover command sent by the first station; and the terminal hands over from the first virtual cell to the first virtual cell according to the handover command. First transmission resources constituting the first virtual cell include a first common resource used by the first station and at least one second station to jointly send a same signal to the terminal, and one or more first dedicated resources used by one of the at least one second station and the first station to independently send a signal to the terminal. Second transmission resources constituting the second virtual cell include a second common resource used by a third station and at least one fourth station to jointly send a same signal to the terminal, and one or more second dedicated resources used by one of the at least one fourth station and the third station to independently send a signal to the terminal. The handover command includes resource locations of the second transmission resources, the second common resource, and the second dedicated resource. Therefore, the terminal may perform receiving or sending of some data with a low transmission delay requirement for a plurality of stations on a common resource, and perform independent receiving or sending of some data with a relatively high transmission delay requirement for a signal station on a dedicated resource. Because the terminal performs data receiving or sending for the single station on the dedicated resource, uplink/downlink interference is reduced, thereby helping promote drone-like communication application in a cellular network.

In a possible design, the first station, the second station, the third station, and the fourth station each are one base station, or a set or a combination of a plurality of base stations having an ideal backhaul.

In a possible design, the first common resource and the second common resource each are used to transmit at least one of a synchronization channel, a control channel, a data channel, a reference signal, and a broadcast channel. The first dedicated resource and the second dedicated resource each are used to transmit at least one of a synchronization channel, a control channel, a data channel, and a reference signal. The reference signal may be a reference signal used for measurement, or a reference signal used for demodulation.

In a possible design, before the terminal sends the virtual cell signal quality to the first station, the terminal receives first resource configuration information of the first transmission resources sent by the first station. The first resource configuration information includes resource locations of the first transmission resources, the first common resource, and the first dedicated resource. The resource location includes a time domain location and/or a frequency domain location, the time domain location includes at least two of a start location, a length, a period, an offset, and an end location in time domain, and the frequency domain location includes at least two of a start location, a bandwidth, and an end location in frequency domain.

In a possible design, the start location and the end location in time domain each may be represented by using a frame number, a subframe number, and/or a symbol index; and the start location and the end location in frequency domain each may be represented by using a resource block location or a resource element location.

In a possible design, the first resource configuration information includes L physical cell identifier PCI lists, L is a positive integer, and one station corresponds to at least one PCI list. The method further includes: The terminal determines N cells in a PCI list corresponding to a to-be-measured station, and measures cell signal quality of the N cells to obtain N pieces of cell signal quality, where N is a positive integer; and the terminal determines station signal quality based on the N pieces of obtained cell signal quality, and sends the station signal quality to the first station.

In a possible design, the cell signal quality is a layer 1 filtering result or a layer 3 filtering result.

In a possible design, the terminal determines the station signal quality of the to-be-measured station based on the N pieces of obtained cell signal quality by using the following steps: If one station corresponds to one PCI list, the terminal determines that a highest value in the N pieces of cell signal quality is the station signal quality of the to-be-measured station; or the terminal determines that an average or a sum of the first M values sorted in the N pieces of cell signal quality in descending order is the station signal quality of the to-be-measured station, where M ≤ N, and M is a positive integer; or the terminal determines that an average or a sum of M' values that each are greater than a first threshold in the N pieces of cell signal quality is the station signal quality of the to-be-measured station, where M' ≤ N, and M' is a positive integer; or the terminal determines that a sum of the N pieces of cell signal quality is the station signal quality of the to-be-measured station. Alternatively, if one station corresponds to at least two PCI lists, the terminal determines subsignal quality of each PCI list, and adds all obtained subsignal quality to obtain the station signal quality, where the subsignal quality is a highest value in n pieces of cell signal quality, where n is a positive integer; or the subsignal quality is an average or a sum of the first m values sorted in n pieces of cell signal quality in descending order, where m ≤ n, and m is a positive integer; or the subsignal quality is an average or a sum of m' values that each are greater than a first threshold in the n pieces of cell signal quality, where m' ≤ n, and m' is a positive integer; or the subsignal quality is a sum of the n pieces of cell signal quality; and the n pieces of cell signal quality represent signal quality of n cells in one PCI list.

In a possible design, the method may further include the following step: The terminal receives measurement configuration information sent by the first station, where the measurement configuration information includes an event-triggered reporting manner or a periodic reporting manner, and an event in the event-triggered reporting manner is: station signal quality of a neighboring station is greater than station signal quality of a serving station by one offset, or station signal quality of a serving station is less than a second threshold. The terminal sends the station signal quality to the first station by using the following implementation: The terminal sends the station signal quality to the first station based on the measurement configuration information when determining that a measurement reporting condition is met.

According to the foregoing station signal measurement method, the terminal reports station signal quality, so that the first station can be assisted in selecting a data transmission station with an optimal channel condition to serve the terminal.

In a possible design, the method may further include the following steps: The terminal receives, on the first common resource, a target data transmission station indicated by the first station, and receives downlink data at a resource location occupied by the target data transmission station, where the target data transmission station is the first station or the second station; or the terminal detects downlink scheduling information on the first common resource and the first dedicated resource, and receives downlink data based on the detected downlink scheduling information at a resource location indicated by the downlink scheduling information; or the terminal detects uplink scheduling information on the first common resource and the first dedicated resource, and sends uplink data based on the detected uplink scheduling information at a resource location indicated by the uplink scheduling information.

According to a seventh aspect, a communications method is provided, and the method includes the following steps: A first station sends a downlink packet data convergence protocol PDCP protocol data unit PDU to a second station, so that the second station sends the received downlink PDCP PDU to a terminal; or the first station receives an uplink PDCP PDU of the terminal sent by the second station, where a cell of the first station and a cell of the at least one second station are included in a first virtual cell that serves the terminal.

In a possible design, transmission resources constituting the first virtual cell include a common resource and one or more dedicated resources. The transmission resources may be virtual cell transmission resources or virtual cell resources. The common resource is used by the first station and the at least one second station to jointly send a same signal to the terminal, and the dedicated resource is used by one of the at least one second station and the first station to independently send a signal to the terminal. In this way, a plurality of stations may jointly receive or send some data with a low transmission delay requirement on the common resource, and a single station independently receives or sends some data with a relatively high transmission delay requirement on the dedicated resource. Because the single station independently occupies the dedicated resource to receive or send data, uplink/downlink interference is reduced, thereby helping promote drone-like communication application in a cellular network. In addition, because the single station occupies the dedicated resource to receive or send data, a coordination delay between the plurality of stations is avoided, thereby helping reduce a signal receiving or sending delay.

In a possible design, the first station and the at least one second station jointly send the downlink PDCP PDU to the terminal on the common resource; or one of the first station and the at least one second station independently sends the downlink PDCP PDU to the terminal on the dedicated resource. Alternatively, the first station and the at least one second station jointly receive, on the common resource, the uplink PDCP PDU sent by the terminal; or one of the first station and the at least one second station independently receives, on the dedicated resource, the uplink PDCP PDU sent by the terminal.

In a possible design, the first resource configuration information includes L physical cell identifier PCI lists, L is a positive integer, and one station corresponds to at least one PCI list. The first station receives station signal quality reported by the terminal, where the station signal quality is determined based on N pieces of cell signal quality, the N pieces of cell signal quality represent signal quality of N cells in at least one PCI list corresponding to one station, and N is a positive integer.

In a possible design, the cell signal quality is a layer 1 filtering result or a layer 3 filtering result.

In a possible design, if one station corresponds to one PCI list, the station signal quality is a highest value in the N pieces of cell signal quality; or the station signal quality is an average or a sum of the first M values sorted in the N pieces of cell signal quality in descending order, where M ≤ N, and M is a positive integer; or the station signal quality is an average or a sum of M' values that each are greater than a first threshold in the N pieces of cell signal quality, where M' ≤ N, and M' is a positive integer; or the station signal quality is a sum of the N pieces of cell signal quality. Alternatively, if one station corresponds to at least two PCI lists, the station signal quality is a sum of subsignal quality of the at least two PCI lists, where the subsignal quality is a highest value in n pieces of cell signal quality, where n is a positive integer; or the subsignal quality is an average or a sum of the first m values sorted in n pieces of cell signal quality in descending order, where m ≤ n, and m is a positive integer; or the subsignal quality is an average or a sum of m' values that each are greater than a first threshold in the n pieces of cell signal quality, where m' ≤ n, and m' is a positive integer; or the subsignal quality is a sum of the n pieces of cell signal quality; and the n pieces of cell signal quality represent signal quality of n cells in one PCI list.

In a possible design, before the first station receives the station signal quality reported by the terminal, the first station sends measurement configuration information to the terminal, where the measurement configuration information includes an event-triggered reporting manner or a periodic reporting manner, and an event in the event-triggered reporting manner is: station signal quality of a neighboring station is greater than station signal quality of a serving station by one offset, or station signal quality of a serving station is less than a second threshold.

In a possible design, after the first station receives the station signal quality reported by the terminal, the first station determines a target data transmission station of the terminal based on the received station signal quality; and if the target data transmission station is the first station, the first station sends data to the terminal at a specified time domain location; or if the target data transmission station is the second station, the first station instructs the target data transmission station to send data to the terminal at a specified time domain location.

In this way, the first station may select, based on the station signal quality reported by the terminal, a data transmission station with an optimal channel condition for the terminal to serve the terminal.

In a possible design, the specified time domain location is in a form of a combination of a frame number and a subframe number.

In a possible design, a cell of the first station and a cell of the at least one second station are included in the first virtual cell that serves the terminal. The method further includes the following steps: When an inter-virtual cell handover condition is met, the first station sends a handover command to the terminal, to instruct the terminal to hand over from the first virtual cell to a second virtual cell, where the handover command includes second resource configuration information of transmission resources constituting the second virtual cell, and the transmission resources constituting the second virtual cell include a common resource used by a third station and at least one fourth station to jointly send a same signal to the terminal, and a dedicated resource used by one of the at least one fourth station and the third station to independently send a signal to the terminal.

In a possible design, the second resource configuration information includes resource locations of the transmission resources constituting the second virtual cell, and resource locations of the common resource and the dedicated resource in the transmission resources constituting the second virtual cell.

According to an eighth aspect, a communications method is provided, and includes the following steps: A terminal obtains transmission resources allocated by a first station to the terminal. The terminal receives, on the transmission resources, a target data transmission station indicated by the first station, and receives downlink data at a resource location occupied by the target data transmission station, where the target data transmission station is the first station or a second station; or the terminal detects downlink scheduling information on the transmission resources, and receives downlink data based on the detected downlink scheduling information at a resource location indicated by the downlink scheduling information; or the terminal detects uplink scheduling information on the transmission resources, and sends uplink data based on the detected uplink scheduling information at a resource location indicated by the uplink scheduling information.

In a possible design, the transmission resources include a common resource and one or more dedicated resources. The transmission resources may be virtual cell transmission resources or virtual cell resources. The common resource is used by the first station and the at least one second station to jointly send a same signal to the terminal, and the dedicated resource is used by one of the at least one second station and the first station to independently send a signal to the terminal. Therefore, the terminal may perform receiving or sending of some data with a low transmission delay requirement for a plurality of stations on the common resource, and perform independent receiving or sending of some data with a relatively high transmission delay requirement for a signal station on the dedicated resource. Because the terminal performs data receiving or sending for the single station on the dedicated resource, uplink/downlink interference is reduced, thereby helping promote drone-like communication application in a cellular network.

In a possible design, the first station is one base station, or a set or a combination of a plurality of base stations having an ideal backhaul, and the second station is one base station, or a set or a combination of a plurality of base stations having an ideal backhaul.

In a possible design, the common resource is used to transmit at least one of a synchronization channel, a control channel, a data channel, a reference signal, and a broadcast channel; and the dedicated resource is used to transmit at least one of a synchronization channel, a control channel, a data channel, and a reference signal. The reference signal may be a reference signal used for measurement, or a reference signal used for demodulation.

In a possible design, the terminal receives, on the common resource, a signal jointly sent by the first station and the at least one second station; or the terminal receives, on the dedicated resource, a signal independently sent by one of the first station and the at least one second station.

In a possible design, the terminal receives first resource configuration information sent by the first station, where the first resource configuration information includes resource locations of the transmission resources, the common resource, and the one or more dedicated resource, the resource location includes a time domain location and/or a frequency domain location, the time domain location includes at least two of a start location, a length, a period, an offset, and an end location in time domain, and the frequency domain location includes at least two of a start location, a bandwidth, and an end location in frequency domain.

In a possible design, the start location and the end location in time domain each may be represented by using a frame number, a subframe number, and/or a symbol index; and the start location and the end location in frequency domain each may be represented by using a resource block location or a resource element location.

In a possible design, the first resource configuration information includes L physical cell identifier PCI lists, L is a positive integer, and one station corresponds to at least one PCI list. The method further includes the following steps: The terminal determines N cells in a PCI list corresponding to a to-be-measured station, and measures cell signal quality of the N cells to obtain N pieces of cell signal quality, where N is a positive integer; and the terminal determines station signal quality based on the N pieces of obtained cell signal quality, and sends the station signal quality to the first station.

In a possible design, the cell signal quality is a layer 1 filtering result or a layer 3 filtering result.

In a possible design, the terminal determines the station signal quality of the to-be-measured station based on the N pieces of obtained cell signal quality by using the following steps: If one station corresponds to one PCI list, the terminal determines that a highest value in the N pieces of cell signal quality is the station signal quality of the to-be-measured station; or the terminal determines that an average or a sum of the first M values sorted in the N pieces of cell signal quality in descending order is the station signal quality of the to-be-measured station, where M ≤ N, and M is a positive integer; or the terminal determines that an average or a sum of M' values that each are greater than a first threshold in the N pieces of cell signal quality is the station signal quality of the to-be-measured station, where M' ≤ N, and M' is a positive integer; or the terminal determines that a sum of the N pieces of cell signal quality is the station signal quality of the to-be-measured station.

Alternatively, if one station corresponds to at least two PCI lists, the terminal determines subsignal quality of each PCI list, and adds all obtained subsignal quality to obtain the station signal quality, where the subsignal quality is a highest value in n pieces of cell signal quality, where n is a positive integer; or the subsignal quality is an average or a sum of the first m values sorted in n pieces of cell signal quality in descending order, where m ≤ n, and m is a positive integer; or the subsignal quality is an average or a sum of m' values that each are greater than a first threshold in the n pieces of cell signal quality, where m' ≤ n, and m' is a positive integer; or the subsignal quality is a sum of the n pieces of cell signal quality; and the n pieces of cell signal quality represent signal quality of n cells in one PCI list.

In a possible design, the method further includes the following steps: The terminal receives measurement configuration information sent by the first station, where the measurement configuration information includes an event-triggered reporting manner or a periodic reporting manner, and an event in the event-triggered reporting manner is: station signal quality of a neighboring station is greater than station signal quality of a serving station by one offset, or station signal quality of a serving station is less than a second threshold. The terminal sends the station signal quality to the first station by using the following implementation: The terminal sends the station signal quality to the first station based on the measurement configuration information when determining that a measurement reporting condition is met.

According to the foregoing station signal measurement method, the terminal reports station signal quality, so that the first station can be assisted in selecting a data transmission station with an optimal channel condition to serve the terminal.

In a possible design, the transmission resources constitute a first virtual cell, the first virtual cell includes a plurality of cells, and a cell of the first station and a cell of the at least one second stations are included in the plurality of cells. Some or all same time-frequency resources reserved by the plurality of cells are used as the transmission resources. The first station sends a same downlink synchronization signal on the same time-frequency resources, to constitute the first virtual cell. The terminal can obtain a physical cell identifier PCI of the first virtual cell by detecting the downlink synchronization signal. The terminal receives a handover command sent by the first station, where the handover command includes second resource configuration information of transmission resources constituting a second virtual cell. The terminal hands over from the first virtual cell to the second virtual cell according to the handover command, where the transmission resources constituting the second virtual cell include a common resource used by a third station and at least one fourth station to jointly send a same signal to the terminal, and a dedicated resource used by one of the at least one fourth station and the third station to independently send a signal to the terminal.

In a possible design, the second resource configuration information includes resource locations of the transmission resources constituting the second virtual cell, and resource locations of the common resource and the dedicated resource in the transmission resources constituting the second virtual cell.

According to a ninth aspect, a communications apparatus is provided. The apparatus has functions of implementing the method in the first aspect or any possible design of the first aspect, the method in the fourth aspect or any possible design of the fourth aspect, the method in the sixth aspect or any possible design of the sixth aspect, or the method in the eighth aspect or any possible design of the eighth aspect. The functions may be implemented by hardware, or may be implemented by hardware executing corresponding software. The hardware or the software includes one or more modules corresponding to the foregoing functions.

In a possible design, the apparatus may be a chip or an integrated circuit.

In a possible design, the apparatus includes a transceiver and a processor. The processor is configured to execute a group of programs. When the programs are executed, the apparatus may perform the method in the first aspect or any possible design of the first aspect, the method in the fourth aspect or any possible design of the fourth aspect, the method in the sixth aspect or any possible design of the sixth aspect, or the method in the eighth aspect or any possible design of the eighth aspect.

In a possible design, the apparatus further includes a memory, configured to store the programs executed by the processor.

In a possible design, the apparatus is a terminal.

According to a tenth aspect, a communications apparatus is provided. The apparatus has functions of implementing the method in the second aspect or any possible design of the second aspect, the method in the third aspect or any possible design of the third aspect, the method in the fifth aspect or any possible design of the fifth aspect, or the method in the seventh aspect or any possible design of the seventh aspect. The functions may be implemented by hardware, or may be implemented by hardware executing corresponding software. The hardware or the software includes one or more modules corresponding to the foregoing functions.

In a possible design, the apparatus may be a chip or an integrated circuit.

In a possible design, the apparatus includes a transceiver and a processor. The processor is configured to execute a group of programs. When the programs are executed, the apparatus may perform the method in the second aspect or any possible design of the second aspect, the method in the third aspect or any possible design of the third aspect, the method in the fifth aspect or any possible design of the fifth aspect, or the method in the seventh aspect or any possible design of the seventh aspect.

In a possible design, the apparatus further includes a memory, configured to store the programs executed by the processor.

In a possible design, the apparatus is an access network device.

In a possible design, the apparatus is a station, and the station is one base station, or a set or a combination of a plurality of base stations having an ideal backhaul.

According to an eleventh aspect, a computer storage medium is provided. The computer storage medium stores a computer program, and the computer program includes an instruction used to perform the method in each of the foregoing aspects or any possible design of each of the foregoing aspects.

According to a twelfth aspect, a computer program product including an instruction is provided. When the computer program product is run on a computer, the computer is enabled to perform the method in each of the foregoing aspects or any possible design of each of the foregoing aspects.

According to a thirteenth aspect, a chip is provided. The chip is connected to a memory, and is configured to read and execute a software program stored in the memory, to implement the method in each of the foregoing aspects or any possible design of each of the foregoing aspects.

According to a fourteenth aspect, a communications system is provided, including the communications apparatus provided in the ninth aspect and the communications apparatus provided in the tenth aspect.

### BRIEF DESCRIPTION OF DRAWINGS

FIG. 1 is a schematic diagram of drone interference in the prior art;
FIG. 2 is a schematic diagram of drone handover in the prior art;
FIG. 3 is a schematic diagram of an architecture of a communications system according to an embodiment of this application;
FIG. 4a is a first schematic structural diagram of an access network according to an embodiment of this application;
FIG. 4b is a second schematic structural diagram of an access network according to an embodiment of this application;
FIG. 5 is a schematic diagram of a design of an air interface protocol stack on a station side according to an embodiment of this application;
FIG. 6 is a schematic diagram of distribution of virtual cell resources according to an embodiment of this application;
FIG. 7a is a schematic diagram of a channel configuration on a common resource according to an embodiment of this application;
FIG. 7b is a schematic diagram of a channel configuration on a dedicated resource according to an embodiment of this application;
FIG. 8 is a schematic flowchart of determining station signal quality according to an embodiment of this application;
FIG. 9 is a schematic diagram of a process in which a single station performs data transmission according to an embodiment of this application;
FIG. 10a is a schematic diagram of a process in which a plurality of stations jointly perform downlink data transmission according to an embodiment of this application;
FIG. 10b is a schematic diagram of a process in which a plurality of stations jointly perform uplink data transmission according to an embodiment of this application;
FIG. 11 is a schematic diagram of an inter-station handover process according to an embodiment of this application;
FIG. 12 is a schematic diagram of an inter-virtual cell handover process according to an embodiment of this application;
FIG. 13 is a schematic flowchart of a communications method according to an embodiment of this application;
FIG. 14 is a first schematic structural diagram of a communications apparatus according to an embodiment of this application;
FIG. 15 is a second schematic structural diagram of a communications apparatus according to an embodiment of this application;
FIG. 16 is a third schematic structural diagram of a communications apparatus according to an embodiment of this application; and
FIG. 17 is a fourth schematic structural diagram of a communications apparatus according to an embodiment of this application.

### DESCRIPTION OF EMBODIMENTS

This application provides a communications method and apparatus, to shorten a data transmission delay of a terminal when virtual cell communication is performed. The method and the device are based on a same invention concept. Because problem-resolving principles of the method and the device are similar, for implementation of the device and the method, mutual reference may be made, and repeated details are not described.

Some terms in this application are described as follows, to help a person skilled in the art have a better understanding.
(1) Terminal: The terminal is also be referred to as user equipment (user equipment, UE), a mobile station (mobile station, MS), a mobile terminal (mobile terminal, MT), or the like, and is a device that provides a user with voice and/or data connectivity. For example, the terminal includes a handheld device or a vehicle-mounted device having a wireless connection function. Currently, the terminal may be a mobile phone (mobile phone), a tablet computer, a notebook computer, a palmtop computer, a mobile internet device (mobile internet device, MID), a wearable device (such as a smartwatch, a smart band, or a pedometer), a vehicle-mounted device (such as a car, a bicycle, an electric vehicle, an airplane, a ship, a train, or a high-speed train), a virtual reality (virtual reality, VR) device, an augmented reality (augmented reality, AR) device, a wireless terminal in industrial control (industrial control), a smart home device (such as a refrigerator, a television, an air conditioner, or an electricity meter), an intelligent robot, a workshop device, a wireless terminal in self driving (self driving), a wireless terminal in a remote surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (such as an intelligent robot, a hot balloon, a drone, or an airplane), or the like. A possible application scenario of this application is that a height of the terminal meets a preset condition or the terminal is in a preset flight state. The foregoing height may be a height of the terminal relative to the ground, an altitude, or a height in another form.
(2) Station: The station is an access network (access network, AN) device, or a set or a combination of a plurality of access network (access network, AN) devices having an ideal backhaul. The AN device is a device that enables a terminal to access a wireless network and that is in a communications system applied to this application. The AN device is a node in a radio access network, and may also be referred to as a base station or a radio access network (radio access network, RAN) node (or device). Currently, the AN device is, for example, a gNB/NR-NB, a transmission reception point (transmission reception point, TRP), an evolved NodeB (evolved Node B, eNB), a radio network controller (radio network controller, RNC), a NodeB (Node B, NB), a base station controller (base station controller, BSC), a base transceiver station (base transceiver station, BTS), a home eNodeB (for example, home evolved NodeB or home Node B, HNB), a baseband unit (base band unit, BBU), or a wireless fidelity (wireless fidelity, wifi) access point (access point, AP).
   For ease of description, an example in which the AN device is referred to as a base station is used for description in this application. Therefore, in this application, one station may be one base station, or may be a set or a combination of a plurality of base stations having an ideal backhaul. When one station is a set or a combination of a plurality of base stations having an ideal backhaul, zero-delay or approximate zero-delay coordination may be performed between the plurality of base stations, so that joint data reception and/or transmission can be implemented. Atypical scenario of an ideal backhaul is a scenario of sharing baseband resources between a plurality of base stations, in other words, a baseband pool (namely, BBU-pool) scenario.
(3) Virtual cell: The virtual cell is a combination of a plurality of intra-frequency cells in an existing cellular network, and may also be referred to as a cell set, a cell combination, a cell cluster, a service-based dedicated cell, a reserved cell, an embedded cell, a subcell, or an air cell. A coverage area of the virtual cell is a union set of coverage areas of the plurality of intra-frequency cells constituting the virtual cell, and resources constituting the virtual cell include some or all resources reserved from the plurality of intra-frequency cells. Base stations to which the plurality of intra-frequency cells belong may jointly send a downlink synchronization signal, and a terminal detects the downlink synchronization signal of the virtual cell to obtain a virtual cell identifier. The virtual cell identifier is used by the terminal to distinguish between different virtual cells, or may be used to distinguish between a virtual cell and a common cell. In the following descriptions, a cell in the existing cellular network may be referred to as a common cell.
(4) Joint transmission and joint reception: Joint transmission means that a plurality of stations to which a virtual cell belongs send a same physical signal or same subcarrier data on a same time-frequency resource, or means that a plurality of base stations having an ideal backhaul send a same physical signal or same subcarrier data on a same time-frequency resource. Joint reception means that a plurality of stations to which a virtual cell belongs jointly receive, on a same time-frequency resource, a physical signal or subcarrier data sent by a terminal, or means that a plurality of base stations having an ideal backhaul jointly receive, on a same time-frequency resource, a physical signal or subcarrier data sent by a terminal. Joint reception and/or transmission means joint reception and/or joint transmission.
(5) Definitions of anchor station and data station: In this application, the anchor station may also be referred to as a first station, and the data station may also be referred to as a second station. A plurality of stations to which a virtual cell belongs include one anchor station and at least one data station. The anchor station is a management node of the virtual cell, and is configured to generate a broadcast message and a radio resource control (radio resource Control, RRC) configuration message. An access network is connected to a core network by using an interface node. The anchor station is an access point of the interface node on an access network side, and is configured to manage a context of a terminal through an S1 interface. For example, in a 4G communications system, the access network is connected to the core network through the S1 interface, and the anchor station is an access point of an S1 interface node on the access network side. In a 5G communications system, the access network is connected to the core network through an NG connection (NG connection), and the anchor station is an access point of the NG connection on the access network side. For a terminal served by one virtual cell, an anchor station performs a packet data convergence protocol (packet data convergence protocol, PDCP) layer function, and a data station does not perform the PDCP layer function. Therefore, in a downlink direction, the anchor station generates a downlink PDCP protocol data unit (Protocol Data Unit, PDU) and sends the downlink PDCP PDU to the data station, and the data station forwards the received downlink PDCP PDU to the terminal. In an uplink direction, the data station receives an uplink PDCP PDU sent by the terminal and sends the received uplink PDCP PDU to the anchor station, and the anchor station processes the received uplink PDCP PDU. If the anchor station includes a plurality of base stations, one of the plurality of base stations completes all functions of the anchor station, and is referred to as an anchor base station, and another base station has a same function as the data station, in other words, has only a data transmission function. During actual application, the function performed by the anchor station may be performed by the anchor base station, a control unit (control unit, CU), a controller, a function entity, or the like. The anchor station further has three layers of protocol functions: a radio link control protocol (radio link control, RLC) layer, a media access control (media access control, MAC) layer, and a physical layer. The data station has three layers of protocol functions: an RLC layer, a MAC layer, and a physical layer. A delay between at least two stations in the plurality of stations to which the virtual cell belongs exceeds a specified threshold. In other words, the at least two stations have a non-ideal backhaul. The at least two stations having a non-ideal backhaul cannot ignore a coordination delay, in other words, cannot perform joint reception and/or transmission of user data in real time. One virtual cell may be a cell that serves a plurality of terminals or a cell on which a plurality of terminals camp. In a possible implementation, one virtual cell includes only one anchor station and only one anchor base station, the anchor base station is fixed and does not change as a terminal moves, and all terminals in the virtual cell can be managed only by the anchor station. In another possible implementation, each terminal has an anchor base station within a coverage area of a virtual cell. Therefore, one virtual cell may include a plurality of anchor base stations. However, an anchor base station of a terminal is determined when the terminal initially accesses the virtual cell, and the anchor base station does not change.
(6) Definitions of common resource and dedicated resource: In this application, transmission resources of a virtual cell include a common resource and one or more dedicated resources. The common resource is used by an anchor station and a data station to jointly receive or send a signal, and the dedicated resource is used by the anchor station or the data station to independently receive or send a signal. The transmission resources of the virtual cell may be virtual cell resources for short in the following descriptions. There may be a coordination delay between the anchor station and the data station. Therefore, the common resource may be used by a plurality of stations to jointly send, for example, a common channel such as a synchronization channel or a broadcast channel after the plurality of stations negotiate a sending moment, and the dedicated resource may be used by a single station to independently send some user data having a relatively high delay requirement.
(7) Data transmission station: The data transmission station is a station that interacts with a terminal when a virtual cell serves the terminal. The data transmission station may be an anchor station, a data station, or a combination of an anchor station and a data station. In this application, if the anchor station and the data station jointly receive or send a signal on a common resource, the data transmission station is the combination of the anchor station and the data station. If a single station receives or sends a signal on a dedicated resource, the data transmission station is a single station that actually receives or sends a physical signal, and may be the anchor station or the data station.
(8). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

In this application, "a plurality of' means two or more than two.

In addition, it should be understood that, in descriptions of this application, terms such as "first" and "second" are merely used for purposes of distinguishing descriptions and are neither intended to indicate or imply relative importance nor intended to indicate or imply a sequence.

The following describes in detail the embodiments of this application with reference to accompanying drawings.

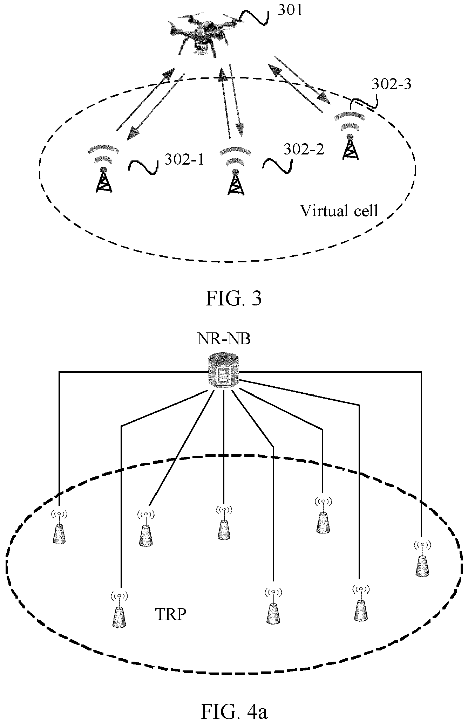

FIG. 3 shows a possible architecture of a communications system to which a communications method provided in an embodiment of this application is applicable. As shown in FIG. 3, the communications system includes a terminal 301 and at least one station 302. Cells generated by the at least one station 302 constitute a virtual cell. FIG. 3 shows three stations: a station 302-1, a station 302-2, and a station 302-3. For term explanations of the terminal 301 and the station 302, refer to the descriptions of the foregoing point (1) and point (2). It is assumed that the station 302-1 is an anchor station, the station 302-2 and the station 302-3 are data stations. The terminal 301 is configured to: receive a configuration message of the station 302-1; and exchange data with the station 302-1, the station 302-2, and the station 302-3. The station 302-1 is configured to determine an available transmission resource of the virtual cell, and may be further configured to coordinate with the station 302-2 and the station 302-3 to share a same transmission resource. Optionally, the terminal 301 is a drone.

It should be noted that the communications system shown in FIG. 3 may include a fourth generation (4th generation, 4G) communications system, a fifth generation (5th generation, 5G) communications system, or various future communications systems.

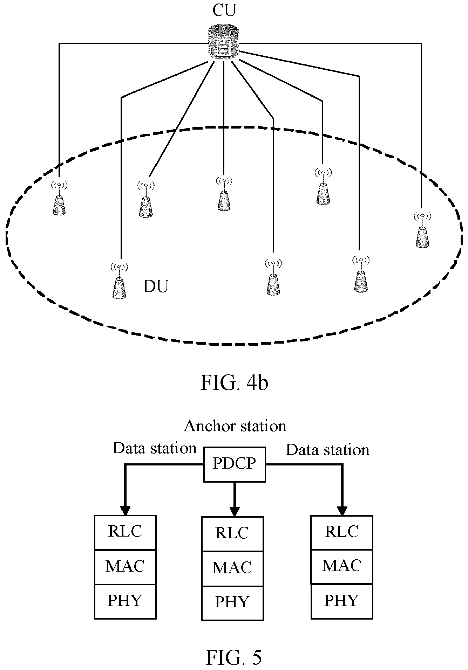

FIG. 4a and FIG. 4b are architectural diagrams of two possible applicable access networks applied to a 5G communications system according to an embodiment of this application. As shown in FIG. 4a, in the 5G communications system, an AN device is a gNB, an anchor station or a data station may include one or more gNBs, and one gNB may include one or more TRPs. As shown in FIG. 4b, in the 5G communications system, a CU-data unit (data unit, DU) split scenario may exist. In the CU-DU split scenario, a CU is an SI access point on an access network side. A downlink data transmission procedure is as follows: After receiving downlink data sent by a core network, the CU distributes the downlink data to a DU, and the DU sends the received downlink data to a terminal. An uplink data transmission procedure is as follows: A terminal sends uplink data to a DU, the DU sends the received uplink data to the CU, and the CU sends the received uplink data to a core network after receiving the uplink data sent by the DU. In the CU-DU split scenario, it may be considered that the CU exists in the anchor station, specifically in an anchor base station, and the DU exists in the data station.

FIG. 5 shows a design of an air interface protocol stack on a station side according to an embodiment of this application. An anchor station includes a PDCP entity, an RLC entity, a MAC entity, and a PHY entity, and a data station includes an RLC entity, a MAC entity, and a PHY entity. When the anchor station is a combination of a plurality of base stations, a same protocol stack is also designed inside an anchor base station. In other words, the anchor base station includes a PDCP entity, an RLC entity, a MAC entity, and a PHY entity. Another base station includes an RLC entity, a MAC entity, and a PHY entity. A design of an air interface protocol stack on a terminal side is in a one-to-one correspondence with the design of the air interface protocol stack on the station side. In other words, a protocol stack (including an RLC entity, a MAC entity, and a PHY entity) is configured for each station or dedicated resource on the terminal side. Optionally, a protocol stack (including an RLC entity, a MAC entity, and a PHY entity) is also configured in a common resource area. There is only one PDCP entity on the terminal side, and all protocol stacks for a common resource or a dedicated resource are connected to the PDCP entity. Communication between a station and a terminal complies with specifications of the air interface protocol stack shown in FIG. 5. As shown in FIG. 5, a difference between functions of protocol layers performed by the anchor station and the data station lies in a PDCP layer. Functions of the PDCP layer used for a user plane include encryption and decryption, IP data header compression, and the like; and functions of the PDCP layer used for a control plane include encryption and decryption, integrity protection, and the like. In this embodiment of this application, based on a virtual cell design, the anchor station and the data station may jointly receive or send a signal, and the anchor station and the data station exchange uplink/downlink PDCP PDUs. This may not change a security algorithm and a key in the method in this application. In addition, the anchor station exchanges data of each data station with a core network, and the core network still perceives that one terminal corresponds to one access network device. This does not require a change on a core network side in the method in this application. As shown in FIG. 5, for specific descriptions of designs of air interface protocol stacks on the anchor station and the data station, refer to the descriptions of the foregoing point (5), and repeated details are not described again.

Based on the protocol stack design shown in FIG. 5, the following describes a method in which a terminal simultaneously transmits data to a plurality of stations.

In a downlink direction, the terminal detects downlink scheduling information and completes downlink data receiving separately on a common resource and a dedicated resource, receives one PDCP PDU from each station, and further obtains a PDCP service data unit (service data unit, SDU) after a PDCP entity on the terminal side completes repeated detection and sorting. The terminal receives different PDCP PDUs from stations.

In an uplink direction, the terminal detects uplink scheduling information separately on a common resource and a dedicated resource, and sends uplink data based on the detected uplink scheduling information at a resource location indicated by the uplink scheduling information. From the perspective of a protocol stack, a PDCP PDU generated by a PDCP entity on the terminal side is sent to an RLC/MAC/PHY protocol layer for sending, where the RLC/MAC/PHY protocol layer is on the terminal side and corresponds to each station. This ensures that any uplink PDCP PDU can be sent to the anchor station by using the plurality of stations.

According to this method, the terminal can simultaneously maintain data communication with the plurality of stations, any station can transmit data to the terminal by sending scheduling information to the terminal, and the terminal obtains the scheduling information of the station through blind detection.

In the following descriptions, various messages notified or indicated by the anchor station to the terminal are generated by the anchor station, and are jointly sent by the anchor station and the data station to the terminal on the common resource, or are independently sent by the anchor station or the data station to the terminal on the dedicated resource. That the terminal sends various messages to the anchor station means that the terminal sends a message to the data station, and the data station forwards the message to the anchor station for processing after receiving the message; or the terminal directly sends a message to the anchor station, and the anchor station processes the message after receiving the message.

The following describes a process in which the terminal performs initial access and synchronization.

The terminal may access a virtual cell in at least the following two manners. In a first manner, the terminal hands over from a common cell to the virtual cell. Abase station to which the common cell belongs is a source base station, and an anchor station to which the virtual cell belongs is a target station. A specific handover process is completed by an anchor base station in the anchor station to which the virtual cell belongs, and the anchor base station may be referred to as a target base station. The source base station may be or may not be a base station in each station to which the virtual cell belongs. The specific handover process generally includes: The source base station sends a handover request message to the target base station, where the handover request message includes at least context information of the terminal. The target base station generates a handover acknowledgment message, where the handover acknowledgment message includes at least resource configuration information of the virtual cell, the resource configuration information includes information such as resource locations of virtual cell resources, and resource locations and resource attributes of some resources in the virtual cell resources, and the resource attribute includes a common resource or a dedicated resource. The target base station sends the handover acknowledgment message to the source base station, and the source base station sends the handover acknowledgment message to the terminal by using a handover command. After receiving the handover command, the terminal detects a downlink synchronization signal of the virtual cell in a common resource area in the virtual cell resources based on the resource configuration information of the virtual cell resources in the handover command, to perform downlink synchronization. In a second manner, the terminal performs access by blindly detecting a downlink synchronization signal of the virtual cell, and the terminal needs to perform virtual cell search during initial access. The virtual cell search is a process in which the terminal detects the downlink synchronization signal of the virtual cell. The virtual cell search specifically includes synchronization channel detection, virtual cell identifier (ID) detection, and the like. This provides preparation for subsequent receiving of a control channel or a broadcast channel.

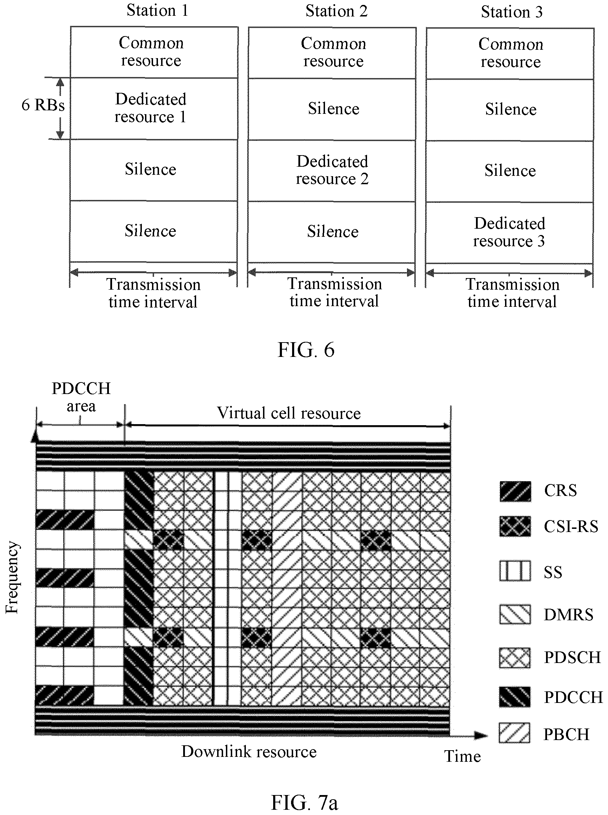

The resource locations of the virtual cell resources may be specified in a protocol, or may be determined through negotiation between one station and another coordinated station. For example, the anchor station negotiates with the data station to determine one station of which some or all resources are used as the virtual cell resources, or determine a plurality of stations of which some or all resources are used as the virtual cell resources. In this embodiment of this application, the virtual cell resources are transmission resources allocated to the terminal. The virtual cell resources include resources of at least one of a time domain dimension, a frequency domain dimension, a code domain dimension, or a beam domain dimension, or include resources of another dimension. Frequency domain resources of the virtual cell may be some resources in a system bandwidth, for example, a resource block (resource block, RB) range or a resource element (resource element, RE) range. To adapt to an application scenario in which stations to which a virtual cell belongs do not have an ideal backhaul, the virtual cell resources are further divided in this embodiment of this application. The virtual cell resources include a common resource and one or more dedicated resources. For definitions and usage of the common resource and the dedicated resource, refer to the foregoing point (6), and repeated details are not described herein again. FIG. 6 shows an example of distribution of virtual cell resources according to an embodiment of this application. As shown in FIG. 6, it is assumed that stations to which a virtual cell belongs include a station 1, a station 2, and a station 3. One of the station 1, the station 2, and the station 3 is an anchor station, and the other two stations are data stations. A common resource is used by the station 1, the station 2, and the station 3 to jointly receive or send a signal. The station 1, the station 2, and the station 3 occupy dedicated resources in a frequency division multiplexing manner. It is assumed that in one transmission time interval, the virtual cell occupies 24 RBs in frequency domain, the 24 RBs are divided into four groups, and each group includes six RBs. For example, the station 1 occupies a dedicated resource 1, the station 2 occupies a dedicated resource 2, and the station 3 occupies a dedicated resource 3. The common resource, the dedicated resource 1, the dedicated resource 2, and the dedicated resource 3 each occupy six RBs. When one station occupies a dedicated resource to receive or send a signal, another station keeps silent on a dedicated resource in a same transmission direction. For example, when the station 1 sends downlink data to the terminal on the dedicated resource 1 occupied by the station 1, the station 2 and the station 3 keep silent on the dedicated resource 2 and the dedicated resource 3 in the transmission time interval. Definitions of silence in an uplink direction and silence in a downlink direction may be specified in a protocol, or may be indicated by the anchor station by notifying the data station of specific silence behavior. For example, the silence in a downlink direction (which may also be referred to as downlink silence) is defined as follows: When a specified station sends data, another station sends only a reference signal on a corresponding time-frequency resource, for example, sends only a common reference signal (Common Reference Signal, CRS), and is not allowed to send another downlink signal or is not allowed to send another downlink signal at power lower than a specified power threshold. The specified power threshold is specified in the protocol or notified by the anchor station to the data station. The silence in an uplink direction (which may also be referred to as uplink silence) is defined as follows: When a specified station receives uplink data, another station does not perform uplink scheduling on a corresponding time-frequency resource. An internal division manner of the virtual cell resources shown in FIG. 6 is merely an example. There may be another manner for dividing RBs occupied by the stations to which the virtual cell belongs, for example, an imparity division manner, and each station may occupy a dedicated resource in another multiplexing manner.

Therefore, when at least two of a plurality of stations to which a virtual cell belongs do not have an ideal backhaul, the plurality of stations may jointly receive or send some data with a low transmission delay requirement on a common resource, and a single station independently receives or sends some data with a relatively high transmission delay requirement on a dedicated resource. Because the single station occupies the dedicated resource to receive or send data, another station keeps silent. This helps reduce uplink/downlink interference, thereby helping promote drone-like communication application in a cellular network. In addition, because the single station occupies the dedicated resource to receive or send data, a coordination delay between the plurality of stations is avoided, thereby helping reduce a signal receiving or sending delay.

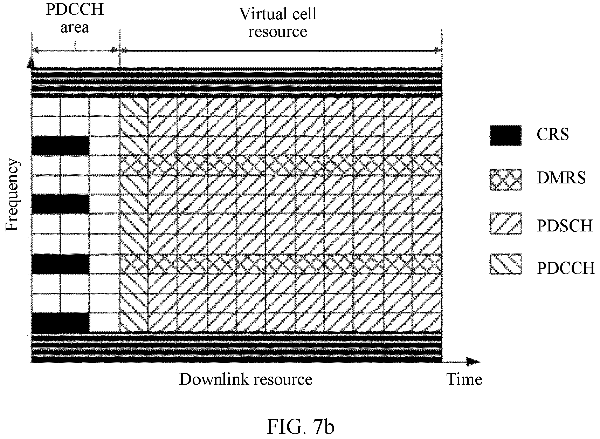

According to the foregoing function attributes of the common resource and the dedicated resource, an embodiment of this application further provides a possible channel configuration on the common resource and the dedicated resource. For example, FIG. 7a shows a possible channel configuration on a common resource, and FIG. 7b shows a possible channel configuration on a dedicated resource. In a multimedia broadcast multicast service single frequency network (multimedia broadcast multicast service single frequency network, MBSFN) subframe mode, the first three symbols in one subframe are used to transmit a physical downlink control channel (physical downlink control channel, PDCCH), and a virtual cell occupies another symbol. If the virtual cell multiplexes an MBSFN subframe, the virtual cell occupies all bandwidths on these symbols, or the virtual may occupy some bandwidths on these symbols. On a symbol occupied by the virtual cell, the common resource is used to transmit a public message or a broadcast message, and the dedicated resource supports a unicast service performed by a station for a terminal. A synchronization channel, a control channel, a data channel, a reference signal, and a broadcast channel may be transmitted on the common resource. The reference signal includes a demodulation reference signal or a channel measurement reference signal. Specifically, as shown in FIG. 7a, the following signals of the virtual cell may be transmitted on the common resource in virtual cell resources: a CRS, a channel state information measurement pilot (channel state information RS, CSI-RS), a synchronization signal (synchronization signal, SS), an uplink demodulation reference signal (Demodulation Reference Signal, DMRS), a physical downlink shared channel (physical downlink shared channel, PDSCH), a PDCCH, and a physical broadcast channel (physical broadcast channel, PBCH). A control channel, a data channel, and a demodulation reference signal may be transmitted on the dedicated resource. Specifically, as shown in FIG. 7b, the following signals of the virtual cell may be transmitted on the dedicated resource in the virtual cell resources: a CRS, a DMRS, a PDSCH, and a PDCCH. It should be noted that, if the virtual cell does not multiplex the MBSFN subframe, the symbol occupied by the virtual cell does not include the CRS. This avoids impact imposed on an existing terminal. It can be understood that FIG. 7a and FIG. 7b are merely examples of a possible channel configuration on the virtual cell resources. The method in the embodiments of this application is applicable to any possible channel configuration manner.

The following describes a manner in which a station notifies resource configuration information of virtual cell resources, or a manner in which a terminal obtains resource configuration information of virtual cell resources.

The resource configuration information of the virtual cell resources includes the virtual cell resource locations, an internal division mode of the virtual cell resources, a channel configuration on the virtual cell resources, and the like. Specifically, the internal division mode of the virtual cell resources may include: an area occupied by a common resource in the virtual cell resources and an area occupied by a dedicated resource in the virtual cell resources. The internal division mode of the virtual cell resources may be specified in the protocol. The terminal determines, by using a handover command or a broadcast message, that a system can support the internal division mode of the virtual cell resources. Alternatively, a station notifies the terminal of the resource configuration information of the virtual cell resources, and adds the internal division mode of the virtual cell resources to the resource configuration information, where the notification may be performed by using a handover command, a broadcast message, another RRC message, or the like; and the terminal may determine the internal division mode of the virtual cell resources according to the notification by the station.

The anchor station sends the resource configuration information of the virtual cell resources to the terminal, and the terminal receives the resource configuration information of the virtual cell resources sent by the station, and determines resource locations of the virtual cell resources, where the resource locations of the virtual cell resources may be time domain locations and/or frequency domain locations of the virtual cell resources, and the time domain locations each specifically includes at least two of a start location, a length, a period, an offset, and an end location of each of the virtual cell resources in time domain. Alternatively, the anchor station indicates time domain locations of the virtual cell resources to the terminal by transmitting a time unit pattern, and the anchor station may indicate frequency domain locations of the virtual cell resources by indicating at least two of a start location, a bandwidth, and an end location in frequency domain. Alternatively, if each frequency band in the system bandwidth is numbered in advance, the anchor station indicates frequency domain locations of the virtual cell resources by indicating one or more frequency band numbers. The method for indicating the resource locations of the virtual cell resources is not limited to the foregoing several methods, and is not limited in this application. Further, the anchor station indicates the internal division mode of the virtual cell resources to the terminal. Regardless of whether the resource configuration information indicates the resource locations of the virtual cell resources, the anchor station may indicate, by using a method same as the foregoing method for indicating the time domain/frequency domain locations of the virtual cell resources, a time domain/frequency domain location occupied by the common resource and a time domain/frequency domain location of a dedicated resource occupied by each station. Alternatively, if the resource configuration information indicates the resource locations of the virtual cell resources, areas occupied by the common resource and the dedicated resource in the virtual cell resources are further indicated. For example, if each station to which the virtual cell belongs occupies a dedicated resource in a frequency division multiplexing manner, the anchor station may indicate, in the resource configuration information, an RB location and/or a quantity of RBs occupied by the common resource, and an RB location and a bandwidth occupied by the dedicated resource of each station. It is assumed there are three stations to which the virtual cell belongs, and the virtual cell occupies 24 RBs specifically from an RB 6 to an RB 29 on a single subframe. In the resource configuration information, the anchor station indicates that RB locations occupied by the common resource are the RB 6 to the RB 11, and RB locations occupied by the dedicated resource are the RB 12 to the RB 29, and each station occupies 6 RBs; or the anchor station indicates that RBs occupied by the dedicated resource are divided into 3 groups, and the terminal may determine, based on the 3 groups, that each station occupies 6 RBs. Optionally, the anchor station indicates, to the terminal by using a resource mapping pattern, the areas occupied by the common resource and the dedicated resource in the virtual cell resources. The anchor station may further indicate, to the terminal, a mapping relationship between each station and a dedicated resource. Specifically, the mapping relationship between each station and a dedicated resource may be represented by using a correspondence between a station index and a dedicated resource, or may be represented by using a correspondence between a physical cell identifier (Physical cell ID, PCI) list and a dedicated resource. When one station includes only one base station, the station corresponds to one PCI list. When one station includes a plurality of base stations having an ideal backhaul, the station corresponds to one or more PCI lists. The anchor station may indicate a PCI list to the terminal by using the resource configuration information.

A channel configuration notification is not specifically limited in this application. The anchor station may directly indicate channel configurations on the common resource and the dedicated resource in the resource configuration information, for example, directly indicate names of channels respectively configured on the common resource and the dedicated resource. A specific channel location may be specified in the protocol.

The following describes a mobility management procedure and a basic principle in the embodiments of this application from the perspective of mobility measurement, inter-station handover, and inter-virtual cell handover.

### Mobility measurement

The anchor station performs measurement configuration on the terminal by sending measurement configuration information to the terminal, and the measurement configuration information includes a resource configuration of a neighboring virtual cell. The terminal performs measurement based on the measurement configuration information, and the measurement includes a process of measuring and reporting channel quality of a current serving cell or a current serving virtual cell, a process of measuring and reporting channel quality of a neighboring cell or a neighboring virtual cell, and the like. There are different reporting trigger types for measurement and reporting, for example, event-triggered reporting and periodic reporting. After the measurement is completed, the terminal may determine, according to a reporting trigger criterion for the measurement configuration, whether a reporting condition is met. When the reporting condition is met, the terminal performs measurement and reporting for the anchor station. If a reporting type is periodic reporting, the anchor station further needs to configure a reporting period for the terminal, and the terminal periodically reports a measurement report to the anchor station based on the reporting period. If a reporting type is event-triggered reporting, the anchor station further needs to configure a measurement event and a threshold for the terminal, and the terminal triggers sending of a measurement report only after the measurement event entering threshold is met or after the measurement event entering threshold is met for a period of time. For example, the measurement event may be any one of the following: Station signal quality of a neighboring station is greater than station signal quality of a serving station by one offset, for example, a station A3 event: station 2 > station 1 + 3 db; or station signal quality of a serving station is less than a threshold 1, and/or station signal quality of a neighboring station is greater than a threshold 2. The serving station herein is a data transmission station. For a definition of the data transmission station, refer to the descriptions in the foregoing point (7), and details are not described herein again. If the anchor station indicates a resource location of the neighboring virtual cell to the terminal by using the measurement configuration information, the terminal may detect signal quality of the neighboring virtual cell on a common resource of the neighboring cell based on the resource location of the neighboring virtual cell, and perform measurement and reporting when a measurement reporting condition is met. For example, the measurement event may be any one of the following: The signal quality of the neighboring virtual cell is greater than signal quality of a serving virtual cell by a specific threshold, for example, a virtual cell A3 event: virtual cell 2 > virtual cell 1 + offset (offset); or signal quality of a serving virtual cell is less than a threshold 3, and/or signal quality of a neighboring virtual cell is greater than a threshold 4.

The foregoing station signal quality may be used to represent radio signal strength of a station. For example, the station signal quality may be reference signal received power (Reference Signal Received Power, RSRP) of the station. A station signal quality measurement manner in this embodiment of this application may include but is not limited to either of the following two manners.

Measurement manner 1: The terminal measures a dedicated pilot signal to obtain the station signal quality.

It is assumed that the common resource includes a dedicated pilot resource allocated to each station. Each station sends a dedicated reference signal on the dedicated pilot resource in the common resource. The terminal measures the dedicated reference signal to obtain station signal quality of each station on the common resource, and reports a measurement result to the anchor station. The anchor station may determine the station signal quality of each station on the common resource based on the measurement result. Similarly, it is assumed that a dedicated resource occupied by each station includes a dedicated pilot resource allocated to the station. Each station sends a dedicated reference signal on the dedicated pilot resource in the dedicated resource occupied by the station. Optionally, the anchor station may further indicate, to the terminal, the dedicated resource occupied for sending the dedicated reference signal. The terminal obtains station signal quality of each station on the dedicated resource through measurement, and reports a measurement result to the anchor station. The anchor station may determine the station signal quality of each station on the dedicated resource based on the measurement result. The dedicated reference signal may be a CSI-RS. Each station sends a CSI-RS on the dedicated pilot resource in the dedicated resource occupied by the station. The anchor station may further indicate, to the terminal, the dedicated resource occupied for sending the CSI-RS. It should be noted that, when measuring the station signal quality of each station on the dedicated resource, the terminal measures only a reference signal on a bandwidth occupied by the dedicated resource. Therefore, the terminal needs to add information about a part of the measured bandwidth to the to-be-reported measurement result, for example, add an RB group number, an RB sequence number range, and a CSI-RS process number.

Measurement manner 2: The terminal measures cell signal quality, and determines the station signal quality based on the cell signal quality.

The anchor station may indicate a PCI list to the terminal by using the resource configuration information. The anchor station specifically indicates a PCI list corresponding to each station. One station may correspond to one PCI list, or may correspond to a plurality of PCI lists. The terminal measures cell signal quality of a plurality of cells in a PCI list, and combines the plurality of pieces of cell signal quality according to a specified combination method to obtain the station signal quality. A process in which the terminal measures the cell signal quality may be briefly described as follows: The terminal obtains the cell signal quality through existing pilot measurement, and the existing pilot measurement includes measurement of a primary synchronization signal (Primary Synchronized Signal, PSS), a secondary synchronization signal (Secondary Synchronization Signal, SSS), a CRS, and the like. CRS measurement is used as an example. The terminal completes downlink synchronization with a neighboring cell by detecting a downlink synchronization signal of the neighboring cell, and the terminal measures a CRS of the neighboring cell after completing the downlink synchronization with the neighboring cell, to obtain cell signal quality of the neighboring cell. The cell signal quality may be a layer 1 filtering (in other words, physical layer filtering) result, or may be a layer 3 filtering result. The terminal measures, based on one or more PCI lists corresponding to a station, cell signal quality of a plurality of cells covered by the station, and determines station signal quality of the station based on the plurality of pieces of cell signal quality.

In this embodiment of this application, there are several possible implementations for determining the station signal quality of the station based on the plurality of pieces of cell signal quality.

It is assumed that there are N cells. If one station corresponds to one PCI list, the terminal determines that a highest value in N pieces of measured cell signal quality is the station signal quality of the station; or the terminal determines that a sum of N pieces of measured cell signal quality is the station signal quality of the station; or the terminal sorts a plurality of pieces of measured cell signal quality in descending order, and uses an average or a sum of the first M values as the station signal quality of the station, where M ≤ N, and M and N are positive integers; or the terminal uses an average or a sum of M' values that each are greater than a specific threshold in a plurality of pieces of measured cell signal quality as the station signal quality of the station, where M' ≤ N, and M' is a positive integer; or the terminal determines that a sum of N pieces of measured cell signal quality is the station signal quality of the station.

If one station corresponds to a plurality of PCI lists, the terminal first determines subsignal quality of each PCI list, and then adds a plurality of pieces of sub signal quality to obtain a sum serving as the station signal quality of the station, or uses an average of a plurality of pieces of subsignal quality as the station signal quality of the station. The subsignal quality may be determined by using any one of the foregoing methods used when one station corresponds to one PCI list. Specifically, the terminal determines the subsignal quality of each PCI list, and adds all obtained subsignal quality to obtain the station signal quality. The subsignal quality is a highest value in n pieces of cell signal quality, where n is a positive integer; or the subsignal quality is an average or a sum of the first m values sorted in n pieces of cell signal quality in descending order, where m ≤ n, and m is a positive integer; or the subsignal quality is an average or a sum of m' values that each are greater than a first threshold in n pieces of cell signal quality, where m' ≤ n, and m' is a positive integer; or the subsignal quality is a sum of n pieces of cell signal quality. The n pieces of cell signal quality represent signal quality of n cells in one PCI list.

The foregoing manners of determining station signal quality based on a plurality of pieces of cell signal quality are merely some examples. It can be understood that any form of screening or combination performed based on cell signal quality is a manner in which cell signal quality represents station signal quality, and application of the any form of screening or combination to the method in this embodiment of this application falls within the protection scope of this application.

The terminal may obtain the station signal quality of each station according to the foregoing method. The measurement report sent by the terminal may include station signal quality of a plurality of stations sorted in descending order. Optionally, the measurement report includes station signal quality of K stations sorted in descending order other than the serving station.

The manner of determining station signal quality based on a plurality of pieces of cell signal quality, a related threshold, a quantity value K in the measurement report, an offset, and the like may be specified in the protocol or may be notified by the anchor station to the terminal.

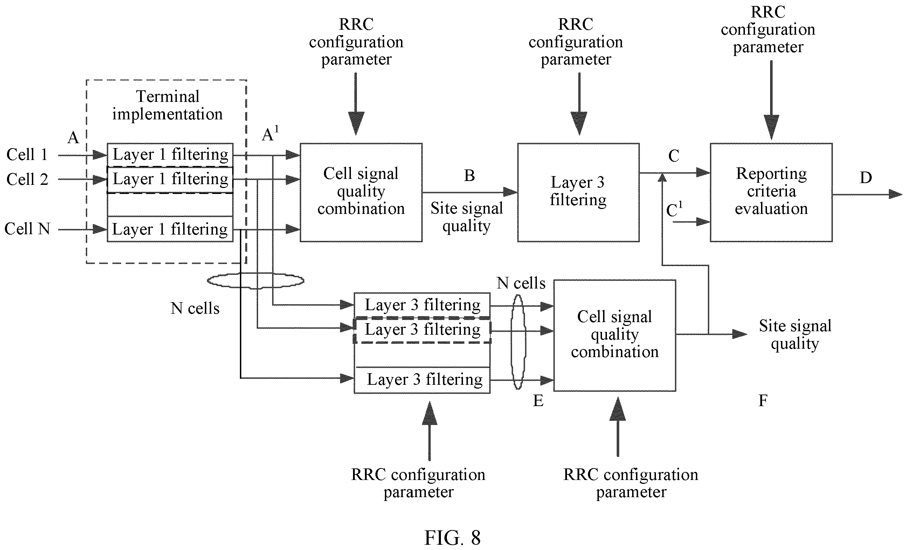

FIG. 8 is a schematic flowchart of determining station signal quality based on a plurality of pieces of cell signal quality. As shown in FIG. 8, it is assumed that cells represented by one or more PCI lists corresponding to a station include a cell 1 to a cell N. The terminal may determine the station signal quality in two manners. FIG. 8 shows the two manners. During actual application, the terminal selects one of the two manners to determine the station signal quality. Specifically, in a first manner, the terminal separately performs layer 1 filtering on cell signal quality of N cells, where a layer 1 filtering result represents the cell signal quality; combines the cell signal quality based on the layer 1 filtering result, to obtain the station signal quality; and performs layer 3 filtering on the station signal quality. The terminal evaluates a reporting criteria, and reports a layer 3 filtering result when a reporting condition is met. Alternatively, in a second manner, the terminal separately performs layer 1 filtering on cell signal quality of N cells and then separately performs layer 3 filtering, where a layer 3 filtering result represents the cell signal quality; and combines the cell signal quality based on the layer 3 filtering result, to obtain the station signal quality. The terminal evaluates a reporting criteria, and reports the obtained station signal quality when a reporting condition is met. A process of combining cell signal quality is a process of determining station signal quality in any one of the foregoing implementations. A filtering model shown in FIG. 8 is an example, and a filtering model in a 5G system is also applicable to this embodiment of this application. The following parameters including a filtering parameter such as a filtering coefficient, a combination parameter such as a quantity of cells selected from a cell list, and a reporting criterion such as a related threshold, a quantity value K in a measurement report, an offset, and the like are all indicated by the anchor station to the terminal by using an RRC message, and are specifically indicated by using an RRC configuration parameter (RRC configures parameters). A possible RRC message includes an RRC connection reconfiguration message and the like.

### Inter-station handover:

First, the terminal accesses a virtual cell, and transmits uplink/downlink data to a data transmission station.

If the terminal hands over from a common cell to a virtual cell, the terminal may obtain, from a handover command, a location of a common resource indicated by the anchor station, and the terminal detects a downlink synchronization signal of the virtual cell on the common resource, to complete downlink synchronization with the virtual cell. Optionally, the anchor station sends a broadcast message on the common resource, and the terminal may further obtain all resource configuration information of the virtual cell by receiving the broadcast message on the common resource, or may obtain all resource configurations of the virtual cell from the handover command. After the terminal completes the downlink synchronization, the data transmission station sends an uplink scheduling grant (namely, UL-Grant) to the terminal to allocate an uplink resource to the terminal. The terminal sends uplink data to the data transmission station based on the uplink resource indicated by the UL-Gant. After the data transmission station receives the uplink data sent by the terminal, the data transmission station sends the uplink data to the anchor station for processing. For example, the uplink data may be a handover complete message, a station signal quality measurement report, or user data. For downlink transmission, the anchor station may indicate, to the terminal on the common resource, a specific station serving as the data transmission station of the terminal, and the terminal receives downlink data on a dedicated resource of the indicated data transmission station. Alternatively, the anchor station does not indicate, to the terminal, a specific station serving as the data transmission station of the terminal, and the terminal blindly detects downlink scheduling on all dedicated resources of all stations. The terminal may receive downlink data after obtaining downlink scheduling information by detecting PDCCH scheduling, or may receive downlink data through semi-persistent scheduling. A downlink transmission procedure is roughly as follows: The anchor station receives downlink data sent by a core network, and sends a downlink data PDCP PDU to the data transmission station; and then the data transmission station sends the downlink data to the terminal.

If the terminal accesses a virtual cell by blindly detecting a downlink synchronization signal of the virtual cell, the anchor station sends a broadcast message on a common resource. After detecting the downlink synchronization signal, the terminal further obtains all resource configuration information of the virtual cell by receiving the broadcast message, and then connects to the anchor station, specifically connects to an anchor base station in the anchor station by using a random access process. After the terminal establishes an RRC connection to the anchor base station, the data transmission station sends a UL-Grant to the terminal, the terminal sends uplink data to the data transmission station based on an uplink resource indicated by the UL-Grant, and the data transmission station sends the uplink data to the anchor station for processing after receiving the uplink data sent by the terminal. For example, the uplink data may be a station signal quality measurement report or user data. For downlink transmission, the anchor station may indicate, to the terminal on the common resource, a specific station serving as the data transmission station of the terminal, and the terminal receives downlink data on a dedicated resource of the indicated data transmission station. Alternatively, the anchor station does not indicate, to the terminal, a specific station serving as the data transmission station of the terminal, and the terminal blindly detects downlink scheduling on all dedicated resources of all stations. The terminal may receive downlink data after obtaining downlink scheduling information by detecting PDCCH scheduling, or may receive downlink data through semi-persistent scheduling. A downlink transmission procedure is roughly as follows: The anchor station receives downlink data sent by a core network, and sends a downlink data PDCP PDU to the data transmission station; and then the data transmission station sends the downlink data to the terminal.

For details about the initial access and synchronization process of the terminal, refer to the foregoing descriptions, and repeated details are not described herein again.

The following describes a process in which the terminal hands over from a current data transmission station to a target station.

Specifically, the terminal measures the station signal quality, and sends a measurement report to the anchor station when a measurement reporting condition is met. The anchor station receives the measurement report, and determines a target station of the terminal based on the measurement report. If the target station is the anchor station, the anchor station starts to send data to the terminal at a specified time domain location. If the target station is a data station, the anchor station instructs the data station to start to send data to the terminal at a specified time domain location. The specified time domain location may be, for example, a frame number and a subframe number. The anchor station may indicate, to the terminal on the common resource, a specific station serving as the target station of the terminal. Optionally, the anchor station may further indicate effective moment information of the target station. The terminal receives downlink data on a dedicated resource of the indicated target station. Alternatively, the anchor station instructs the target station to perform downlink scheduling on the terminal, and the terminal blindly detects downlink scheduling on all dedicated resources of all stations.

The following describes several data transmission methods during inter-station handover.

Single-station data transmission is maintained from the perspective of the following four points.
1. No retransmission. If a radio link control (Radio Link Control, RLC)-UM mode is used (in other words, automatic repeat request (automatic repeat request, ARQ) retransmission at an RLC layer is not supported), and maxHARQ-Tx = 1 (in other words, hybrid automatic repeat request (hybrid automatic repeat request, HARQ) retransmission at a MAC layer is not supported), there is no retransmission mechanism for the data station. The anchor station directly sends a PDCP PDU to the target station, and instructs the target station to start to send downlink data to the terminal at a specified time point. The specified time point may be, for example, in a form of "frame number + subframe number". The terminal may obtain scheduling information of the target station by blindly detecting scheduling. Alternatively, terminal obtains effective moment information of the target station by using a configuration message, and starts to detect scheduling information of the target station at an effective moment.
2. Asynchronous transmission based HARQ retransmission. If an RLC-UM mode is used (in other words, ARQ retransmission at an RLC layer is not supported), and maxHARQ-Tx > 1 (in other words, HARQ retransmission at a MAC layer is supported), based on asynchronous adaptive retransmission, the target station can perform only new transmission for the first several data transmissions after an absolute handover point, and the absolute handover point is a time point that is indicated by the anchor station to the target station and at which the anchor station starts to send downlink data to the terminal.
3. PDCP retransmission. If an RLC-AM mode is used (in other words, ARQ retransmission at an RLC layer is supported), and maxHARQ-Tx > 1 (in other words, HARQ retransmission at a MAC layer is supported), the anchor station may send a status report (namely, a PDCP status report) to the terminal, or the anchor station requires the terminal to return a PDCP status report. In addition, PDCP PDU uplink/downlink data is sent again. In this method, the terminal needs to clear a HARQ buffer (HARQ buffer) and an RLC buffer (RLC buffer).
4. RLC layer retransmission. After the terminal switches from the data transmission station to the target station, the data transmission station and the target station exchange RLC buffer status information and buffer data, for example, downlink RLC PDU data on which no ARQ acknowledgment is performed, and/or an uplink RLC SDU that is received but is not delivered to a PDCP layer.

### Inter-virtual cell handover:

It is assumed that a virtual cell currently accessed by the terminal is a serving virtual cell, an anchor station connected to the terminal is a source anchor station, and specifically, a source anchor base station in the source anchor station. The terminal is to hand over to a target virtual cell, an anchor station to which the target virtual cell belongs is a target anchor station, and the target anchor station includes a target anchor base station.

The terminal measures signal quality of a neighboring virtual cell, and sends a measurement report to the source anchor base station when a measurement reporting condition is met. The source anchor base station receives the measurement report, and performs handover determining according to a handover algorithm. The source anchor base station sends a handover request message to the target anchor base station, where the handover request message includes at least context information of the terminal. The target anchor base station sends a handover request acknowledgment message to the source anchor base station, and the source anchor base station sends the handover request acknowledgment message to the terminal by using a handover command. The handover command includes an identifier of the target virtual cell, resource configuration information of the target virtual cell, and/or the like. The resource configuration information of the target virtual cell includes resource locations of transmission resources constituting the target virtual cell, a resource location of a common resource in the transmission resources constituting the target virtual cell, and a resource location of a dedicated resource in the transmission resources constituting the target virtual cell. After receiving the handover command, the terminal synchronizes with the target virtual cell. For steps omitted in the inter-virtual cell handover procedure, refer to a common inter-cell handover process in the prior art. If a current serving virtual cell of the terminal is a first virtual cell, and the target virtual cell is a second virtual cell, the terminal receives a handover command sent by the first station, where the handover command includes second resource configuration information of transmission resources constituting the second virtual cell; and the terminal hands over from the first virtual cell to the second virtual cell according to the handover command, where the transmission resources constituting the second virtual cell include a common resource used by a third station and at least one fourth station to jointly send a same signal to the terminal, and a dedicated resource used by one of the at least one fourth station and the third station to independently send a signal to the terminal.

A process in which the terminal performs data transmission, inter-station handover, and inter-virtual cell handover is described below by using a specific application scenario. For example, a virtual cell that currently serves the terminal or in which the terminal camps on is a virtual cell 1. There are three stations to which the virtual cell 1 belongs: a station 1, a station 2, and a station 3. The station 1 is an anchor station, and the station 2 and the station 3 are data stations. The station 1 is connected to a core network to transmit data to the terminal.

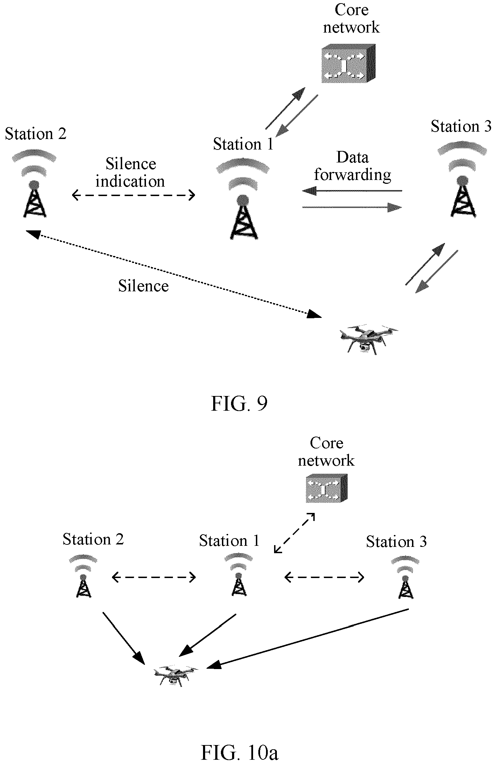

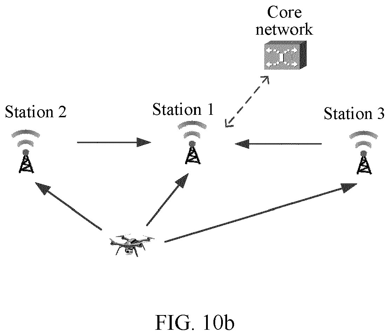

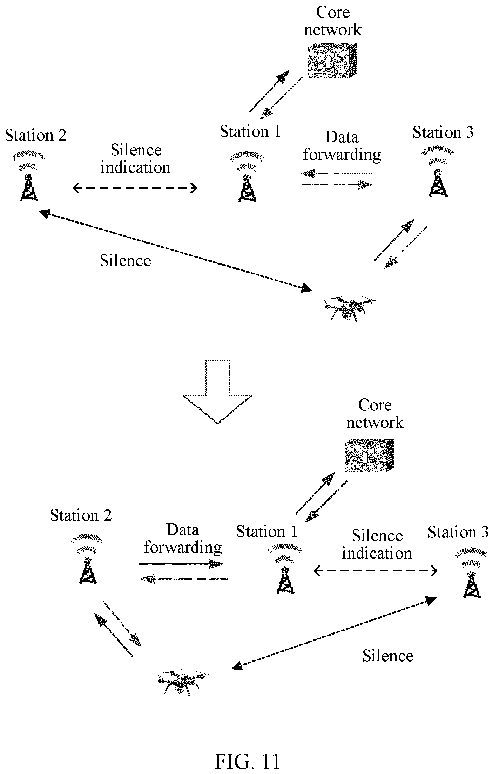

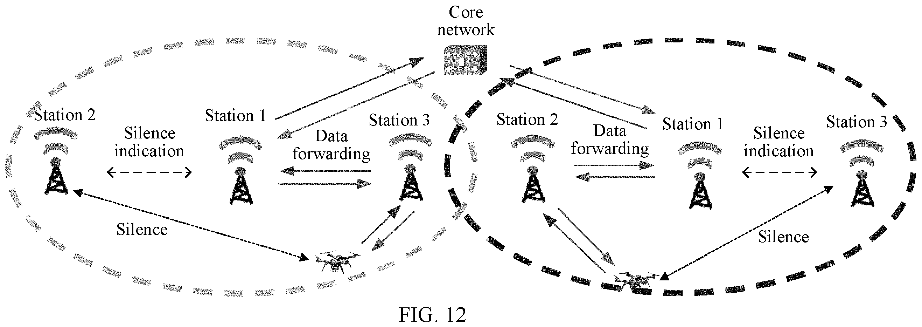

FIG. 9 shows a process in which the terminal performs data transmission when a data transmission station is the station 3. The station 1 sends a silence indication to the station 2. In a process in which the station 3 transmits data to the terminal, the station 2 keeps silent. FIG. 10a is a schematic diagram in which an anchor station and data stations jointly send data on a common resource. FIG. 10b is a schematic diagram in which an anchor station and data stations jointly receive data on a common resource. The station 1 sends a downlink PDCP PDU to the station 2 and the station 3, and each station sends a same downlink PDCP PDU. The terminal receives the downlink PDCP PDU from each station. The terminal sends an uplink PDCP PDU on an uplink resource in the common resource, and each station receives the uplink PDCP PDU on the common resource. FIG. 11 is a schematic diagram in which the terminal hands over from the station 3 to the station 2 during single-station data transmission. As shown in FIG. 11, in a process in which the terminal transmits data to the station 3, the station 2 keeps silent. After the terminal hands over from the station 3 to the station 2, the station 3 keeps silent in a process in which the terminal transmits data to the station 2. FIG. 12 is a schematic diagram in which a terminal hands over between virtual cells. As shown in FIG. 12, a target virtual cell to which the terminal is to hand over is a virtual cell 2, and there are three stations to which the virtual cell 2 belongs: a station 4, a station 5, and a station 6. The station 4 is an anchor station, and the station 5 and the station 6 are data stations. The station 4 is connected to a core network to transmit data to the terminal. The terminal sends a measurement report to a station in the virtual cell 1, and hands over from the virtual cell 1 to the virtual cell 2 when a handover condition is met. A specific handover process is described above.

It should be noted that the protocol stack design, the method for transmitting data between a terminal and a plurality of stations, the initial access and synchronization process of the terminal, the manner in which a station notifies resource configuration information of virtual cell resources, the virtual cell channel configuration, the mobility measurement, the inter-station handover, and the inter-virtual cell handover described in the foregoing embodiments may be randomly combined to constitute a solution to be protected in this application.

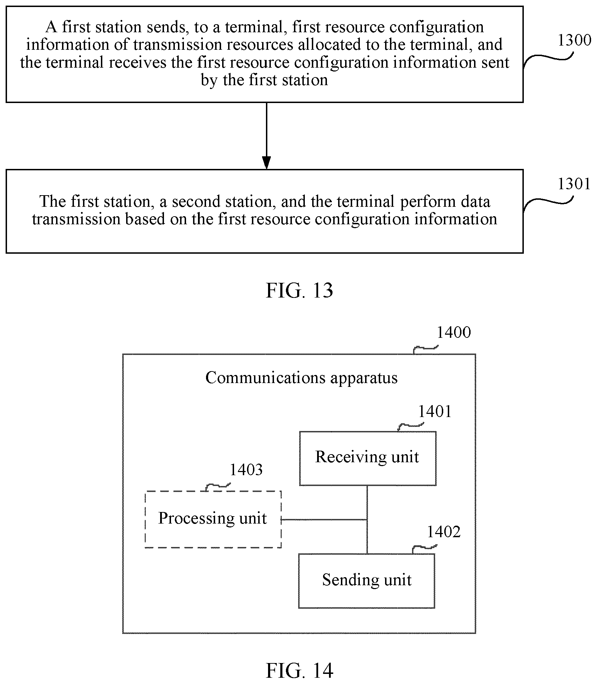

According to the foregoing embodiments, as shown in FIG. 13, an embodiment of this application provides a communications method, specifically including the following steps.

S1300. A first station sends, to a terminal, first resource configuration information of transmission resources allocated to the terminal, and the terminal receives the first resource configuration information sent by the first station.

The transmission resources include a common resource and one or more dedicated resources, the common resource is used by the first station and at least one second station to jointly send a same signal to the terminal, and the dedicated resource is used by one of the at least one second station and the first station to independently send a signal to the terminal.

The same signal means a same signal waveform in time domain or same subcarrier data in frequency domain.

S1301. The first station, the second station, and the terminal perform data transmission based on the first resource configuration information.

Specifically, the terminal determines, based on the first resource configuration information, the transmission resources indicated by the first resource configuration information, and interacts with the first station and the second station.

The first station and the at least one second station jointly send downlink data to the terminal on the common resource, and the terminal receives, on the common resource, the downlink data jointly sent by the first station and the at least one second station. Alternatively, one of the at least one second station and the first station independently sends downlink data to the terminal on the dedicated resource, and the terminal receives, on the dedicated resource, the downlink data independently sent by the one of the at least one second station and the first station.

The terminal sends uplink data to the first station and the at least one second station on the common resource, and the first station and the at least one second station jointly receive, on the common resource, the uplink data sent by the terminal. Alternatively, the terminal sends uplink data to one of the at least one second station and the first station on the dedicated resource, and the one of the at least one second station and the first station receives, on the dedicated resource, the uplink data sent by the terminal.

Based on a same invention concept as the foregoing communications method, as shown in FIG. 14, an embodiment of this application further provides a communications apparatus 1400. The communications apparatus 1400 is configured to perform an operation performed by the terminal in the foregoing communications method. The communications apparatus 1400 includes a receiving unit 1401, a sending unit 1402, and a processing unit 1403. The receiving unit 1401 is configured to receive first resource configuration information that is sent by a first station and that is of transmission resources allocated to a terminal. The transmission resources include a common resource and one or more dedicated resources, the common resource is used by the first station and at least one second station to jointly send a same signal to the terminal, and the dedicated resource is used by one of the at least one second station and the first station to independently send a signal to the terminal. The sending unit 1402 is configured to: receive, on the common resource, the signal jointly sent by the first station and the at least one second station; or receive, on the dedicated resource, the signal independently sent by one of the at least one second station and the first station. The processing unit 1403 is configured to: determine, based on the first resource configuration information, the transmission resources allocated to the terminal; receive a signal by using the receiving unit 1401; and send a signal by using the sending unit 1402.

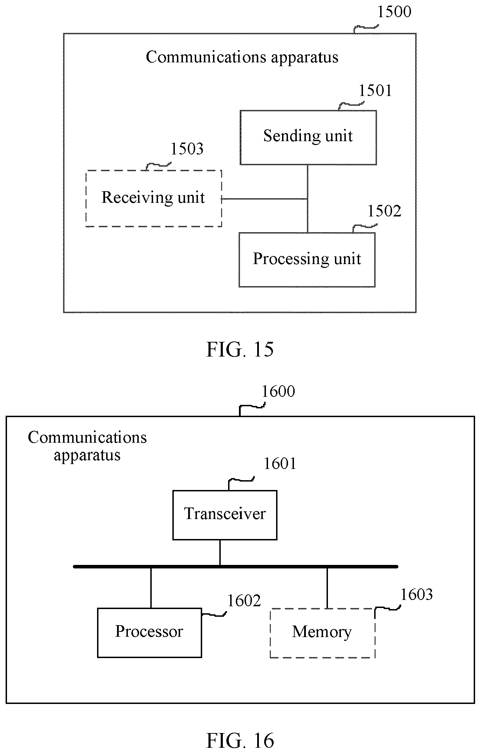

Based on a same invention concept as the foregoing communications method, as shown in FIG. 15, an embodiment of this application further provides a communications apparatus 1500. The communications apparatus 1500 is configured to perform an operation performed by the first station in the foregoing communications method. The communications apparatus 1500 includes a sending unit 1501 and a processing unit 1502, and optionally, further includes a receiving unit 1503. The sending unit 1501 is configured to send, to a terminal, first resource configuration information of transmission resources allocated to the terminal. The transmission resources include a common resource and one or more dedicated resources, the common resource is used by a first station and at least one second station to jointly send a same signal to the terminal, and the dedicated resource is used by one of the at least one second station and the first station to independently send a signal to the terminal. The processing unit 1502 is configured to: determine the first resource configuration information of the transmission resources allocated to the terminal; send a signal by using the sending unit 1501; and receive a signal by using the receiving unit 1503.

Based on a same invention concept as the foregoing communications method, as shown in FIG. 16, an embodiment of this application further provides a communications apparatus 1600. The communications apparatus 1600 is configured to perform an operation performed by the terminal in the foregoing communications method. The communications apparatus 1600 includes a transceiver 1601 and a processor 1602, and optionally, further includes a memory 1603. The processor 1602 is configured to invoke a group of programs. When the programs are executed, the processor 1602 is enabled to perform an operation performed by the terminal in the foregoing communications method. The memory 1603 is configured to store the programs executed by the processor 1602. The function module processing unit 1403 in FIG. 14 may be implemented as the processor 1602, and the receiving unit 1401 and the sending unit 1402 may be implemented as the transceiver 1601.

The processor 1602 may be a central processing unit (central processing unit, CPU), a network processor (network processor, NP), or a combination of a CPU and an NP.

The processor 1602 may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 1603 may include a volatile memory (volatile memory), such as a random access memory (random-access memory, RAM); or the memory 1603 may include a nonvolatile memory (non-volatile memory), such as a flash memory (flash memory), a hard disk drive (hard disk drive, HDD), or a solid-state drive (solid-state drive, SSD); or the memory 1603 may include a combination of the foregoing types of memories.

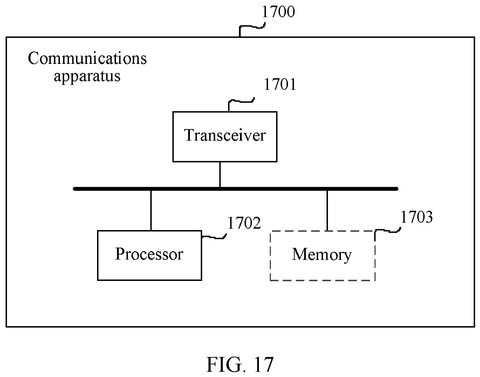

Based on a same invention concept as the foregoing communications method, as shown in FIG. 17, an embodiment of this application further provides a communications apparatus 1700. The communications apparatus 1700 is configured to perform an operation performed by a first station in the foregoing communications method. The communications apparatus 1700 includes a transceiver 1701 and a processor 1702, and optionally, further includes a memory 1703. The processor 1702 is configured to invoke a group of programs. When the programs are executed, the processor 1702 is enabled to perform an operation performed by the terminal in the foregoing communications method. The memory 1703 is configured to store the programs executed by the processor 1702. The function module processing unit 1502 in FIG. 15 may be implemented as the processor 1702, and the sending unit 1501 and the receiving unit 1503 may be implemented as the transceiver 1701.

The processor 1702 may be a central processing unit (central processing unit, CPU), a network processor (network processor, NP), or a combination of a CPU and an NP.

The processor 1702 may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 1703 may include a volatile memory (volatile memory), such as a random access memory (random-access memory, RAM); or the memory 1703 may include a nonvolatile memory (non-volatile memory), such as a flash memory (flash memory), a hard disk drive (hard disk drive, HDD), or a solid-state drive (solid-state drive, SSD); or the memory 1703 may include a combination of the foregoing types of memories.

An embodiment of this application provides a computer storage medium. The computer storage medium stores a computer program, and the computer program includes an instruction used to perform the foregoing communications method.

An embodiment of this application provides a computer program product including an instruction. When the computer program product is run on a computer, the computer is enabled to perform the communications method provided above.

Any communications apparatus provided in the embodiments of this application may alternatively be a chip.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of this application have been described, a person skilled in the art can make changes and modifications to these embodiments once they learn the basic invention concept. Therefore, the following claims are intended to be construed as to cover the preferred embodiments and all changes and modifications falling within the scope of this application.

Obviously, a person skilled in the art can make various modifications and variations to the embodiments of this application without departing from the spirit and scope of the embodiments of this application. This application is intended to cover these modifications and variations provided that they fall within the scope of protection defined by the following claims and their equivalent technologies.

## Claims

1. A communications method, comprising:
receiving, by a terminal, first resource configuration information sent by a first station;
determining, by the terminal based on the first resource configuration information, transmission resources indicated by the first resource configuration information, wherein the transmission resources comprise a common resource and one or more dedicated resources, the common resource is used by the first station and one or more second stations to jointly send a same signal to the terminal, and the dedicated resource is used by one of the one or more second stations and the first station to independently send a signal to the terminal; and
receiving, by the terminal on the common resource, a signal jointly sent by the first station and the one or more second stations, or receiving, by the terminal on the dedicated resource, a signal independently sent by one of the first station and the one or more second stations.

2. The method according to claim 1, wherein the first resource configuration information comprises resource locations of the transmission resources, the common resource, and the one or more dedicated resource, the resource location comprises a time domain location and/or a frequency domain location, the time domain location comprises at least two of a start location, a length, a period, an offset, or an end location in time domain, and the frequency domain location comprises at least two of a start location, a bandwidth, and an end location in frequency domain.

3. The method according to claim 1 or 2, wherein the first resource configuration information comprises L physical cell identifier PCI lists, L is a positive integer, and one station corresponds to one or more PCI lists; and
the method further comprises:
determining, by the terminal, N cells in a PCI list corresponding to a to-be-measured station, and measuring cell signal quality of the N cells to obtain N pieces of cell signal quality, wherein N is a positive integer; and
determining, by the terminal, station signal quality based on the N pieces of obtained cell signal quality, and sending the station signal quality to the first station.

4. The method according to claim 3, wherein the determining, by the terminal, station signal quality of the to-be-measured station based on the N pieces of obtained cell signal quality comprises:
if one station corresponds to one PCI list, determining, by the terminal, that a highest value in the N pieces of cell signal quality is the station signal quality of the to-be-measured station; or determining, by the terminal, that an average or a sum of the first M values sorted in the N pieces of cell signal quality in descending order is the station signal quality of the to-be-measured station, wherein M ≤ N, and M is a positive integer; or determining, by the terminal, that an average or a sum of M' values that each are greater than a first threshold in the N pieces of cell signal quality is the station signal quality of the to-be-measured station, wherein M' ≤ N, and M' is a positive integer; or determining, by the terminal, that a sum of the N pieces of cell signal quality is the station signal quality of the to-be-measured station; or
if one station corresponds to at least two PCI lists, determining, by the terminal, subsignal quality of each PCI list, and adding all obtained subsignal quality to obtain the station signal quality, wherein the subsignal quality is a highest value in n pieces of cell signal quality, wherein n is a positive integer; or the subsignal quality is an average or a sum of the first m values sorted in n pieces of cell signal quality in descending order, wherein m ≤ n, and m is a positive integer; or the subsignal quality is an average or a sum of m' values that each are greater than a first threshold in n pieces of cell signal quality, wherein m' ≤ n, and m' is a positive integer; or the subsignal quality is a sum of n pieces of cell signal quality; and the n pieces of cell signal quality represent signal quality of n cells in one PCI list.

5. The method according to claim 3 or 4, wherein the method further comprises:
receiving, by the terminal, measurement configuration information sent by the first station, wherein the measurement configuration information comprises an event-triggered reporting manner or a periodic reporting manner, and an event in the event-triggered reporting manner is: station signal quality of a neighboring station is greater than station signal quality of a serving station by one offset, or station signal quality of a serving station is less than a second threshold; and
the sending the station signal quality to the first station comprises:
sending, by the terminal, the station signal quality to the first station based on the measurement configuration information when determining that a measurement reporting condition is met.

6. The method according to any one of claims 1 to 5, wherein the transmission resources constitute a first virtual cell, and the first virtual cell comprises a cell of the first station and a cell of the one or more second stations; and
the method further comprises:
receiving, by the terminal, a handover command sent by the first station, wherein the handover command comprises second resource configuration information of transmission resources constituting a second virtual cell; and
handing over, by the terminal, from the first virtual cell to the second virtual cell according to the handover command, wherein the transmission resources constituting the second virtual cell comprise a common resource used by a third station and one or more fourth stations to jointly send a same signal to the terminal, and a dedicated resource used by one of the one or more fourth stations and the third station to independently send a signal to the terminal.

7. The method according to any one of claims 1 to 6, wherein the method further comprises:
receiving, by the terminal on the common resource, a target data transmission station indicated by the first station, and receiving downlink data at a resource location occupied by the target data transmission station, wherein the target data transmission station is the first station or the second station; or detecting, by the terminal, downlink scheduling information on the common resource and the dedicated resource, and receiving downlink data based on the detected downlink scheduling information at a resource location indicated by the downlink scheduling information; or
detecting, by the terminal, uplink scheduling information on the common resource and the dedicated resource, and sending uplink data based on the detected uplink scheduling information at a resource location indicated by the uplink scheduling information.

8. A communications method, comprising:
sending, by a first station to a terminal, first resource configuration information of transmission resources allocated to the terminal, wherein the transmission resources comprise a common resource and one or more dedicated resources, the common resource is used by the first station and one or more second stations to jointly send a same signal to the terminal, and the dedicated resource is used by one of the one or more second stations and the first station to independently send a signal to the terminal.

9. The method according to claim 8, wherein the first resource configuration information comprises resource locations of the transmission resources, the common resource, and the one or more dedicated resource, the resource location comprises a time domain location and/or a frequency domain location, the time domain location comprises at least two of a start location, a length, a period, an offset, and an end location in time domain, and the frequency domain location comprises at least two of a start location, a bandwidth, and an end location in frequency domain.

10. The method according to claim 8 or 9, wherein the first resource configuration information comprises L physical cell identifier PCI lists, L is a positive integer, and one station corresponds to one or more PCI lists; and
the method further comprises:
receiving, by the first station, station signal quality reported by the terminal, wherein the station signal quality is determined based on N pieces of cell signal quality, the N pieces of cell signal quality represent signal quality of N cells in one or more PCI lists corresponding to a station, and N is a positive integer.

11. The method according to claim 10, wherein
if one station corresponds to one PCI list, the station signal quality is a highest value in the N pieces of cell signal quality; or the station signal quality is an average or a sum of the first M values sorted in the N pieces of cell signal quality in descending order, wherein M ≤ N, and M is a positive integer; or the station signal quality is an average or a sum of M' values that each are greater than a first threshold in the N pieces of cell signal quality, wherein M' ≤ N, and M' is a positive integer; or the station signal quality is a sum of the N pieces of cell signal quality; or
if one station corresponds to at least two PCI lists, the station signal quality is a sum of subsignal quality of the at least two PCI lists, wherein the subsignal quality is a highest value in n pieces of cell signal quality, wherein n is a positive integer; or the subsignal quality is an average or a sum of the first m values sorted in n pieces of cell signal quality in descending order, wherein m ≤ n, and m is a positive integer; or the subsignal quality is an average or a sum of m' values that each are greater than a first threshold in the n pieces of cell signal quality, wherein m' ≤ n, and m' is a positive integer; or the subsignal quality is a sum of the n pieces of cell signal quality; and the n pieces of cell signal quality represent signal quality of n cells in one PCI list.

12. The method according to claim 10 or 11, wherein before the receiving, by the first station, station signal quality reported by the terminal, the method further comprises:
sending, by the first station, measurement configuration information to the terminal, wherein the measurement configuration information comprises an event-triggered reporting manner or a periodic reporting manner, and an event in the event-triggered reporting manner is: station signal quality of a neighboring station is greater than station signal quality of a serving station by one offset, or station signal quality of a serving station is less than a second threshold.

13. The method according to any one of claims 8 to 12, wherein after the receiving, by the first station, station signal quality reported by the terminal, the method further comprises:
determining, by the first station, a target data transmission station of the terminal based on the received station signal quality; and
if the target data transmission station is the first station, sending, by the first station, data to the terminal at a specified time domain location; or if the target data transmission station is the second station, instructing, by the first station, the target data transmission station to send data to the terminal at a specified time domain location.

14. The method according to any one of claims 8 to 13, wherein the method further comprises:
sending, by the first station, a downlink packet data convergence protocol PDCP protocol data unit PDU to the second station, so that the second station sends the received downlink PDCP PDU to the terminal; or
receiving, by the first station, an uplink PDCP PDU of the terminal sent by the second station.

15. The method according to any one of claims 8 to 14, wherein a cell of the first station and a cell of the one or more second stations are comprised in a first virtual cell that serves the terminal, and the method further comprises:
when an inter-virtual cell handover condition is met, sending, by the first station, a handover command to the terminal, to instruct the terminal to hand over from the first virtual cell to a second virtual cell, wherein the handover command comprises second resource configuration information of transmission resources constituting the second virtual cell, the transmission resources constituting the second virtual cell comprise a common resource used by a third station and one or more fourth stations to jointly send a same signal to the terminal, and a dedicated resource used by one of the one or more fourth stations and the third station to independently send a signal to the terminal.

16. A communications apparatus, comprising a transceiver and a processor, wherein the processor is configured to invoke a group of programs, and when the programs are executed, the processor is configured to perform the following operations:
receiving, by using the transceiver, first resource configuration information that is sent by a first station and that is of transmission resources allocated to the apparatus, wherein the transmission resources comprise a common resource and one or more dedicated resources, the common resource is used by the first station and one or more second stations to jointly send a same signal to a terminal, and the dedicated resource is used by one of the one or more second stations and the first station to independently send a signal to the terminal; and
receiving, on the common resource by using the transceiver, a signal jointly sent by the first station and the one or more second stations, or receiving, on the dedicated resource by using the transceiver, a signal independently sent by one of the first station and the one or more second stations.

17. The apparatus according to claim 16, wherein the first resource configuration information comprises resource locations of the transmission resources, the common resource, and the one or more dedicated resource, the resource location comprises a time domain location and/or a frequency domain location, the time domain location comprises at least two of a start location, a length, a period, an offset, and an end location in time domain, and the frequency domain location comprises at least two of a start location, a bandwidth, and an end location in frequency domain.

18. The apparatus according to claim 16 or 17, wherein the first resource configuration information comprises L physical cell identifier PCI lists, L is a positive integer, and one station corresponds to one or more PCI lists; and
the processor is further configured to:
determine N cells in a PCI list corresponding to a to-be-measured station, and measure cell signal quality of the N cells to obtain N pieces of cell signal quality, wherein N is a positive integer; and
determine station signal quality based on the N pieces of obtained cell signal quality, and send the station signal quality to the first station by using the transceiver.

19. The apparatus according to claim 18, wherein the processor is specifically configured to:
if one station corresponds to one PCI list, determine that a highest value in the N pieces of cell signal quality is the station signal quality of the to-be-measured station; or determine that an average or a sum of the first M values sorted in the N pieces of cell signal quality in descending order is the station signal quality of the to-be-measured station, wherein M ≤ N, and M is a positive integer; or determine that an average or a sum of M' values that each are greater than a first threshold in the N pieces of cell signal quality is the station signal quality of the to-be-measured station, wherein M' ≤ N, and M' is a positive integer; or determine that a sum of the N pieces of cell signal quality is the station signal quality of the to-be-measured station; or
if one station corresponds to at least two PCI lists, determine sub signal quality of each PCI list, and add all obtained sub signal quality to obtain the station signal quality, wherein the subsignal quality is a highest value in n pieces of cell signal quality, wherein n is a positive integer; or the subsignal quality is an average or a sum of the first m values sorted in n pieces of cell signal quality in descending order, wherein m ≤ n, and m is a positive integer; or the subsignal quality is an average or a sum of m' values that each are greater than a first threshold in the n pieces of cell signal quality, wherein m' ≤ n, and m' is a positive integer; or the subsignal quality is a sum of the n pieces of cell signal quality; and the n pieces of cell signal quality represent signal quality of n cells in one PCI list.

20. The apparatus according to any one of claims 16 to 19, wherein the transmission resources constitute a first virtual cell, and the first virtual cell comprises a cell of the first station and a cell of the one or more second stations; and
the processor is further configured to:
receive, by using the transceiver, a handover command sent by the first station, wherein the handover command comprises second resource configuration information of transmission resources constituting a second virtual cell; and
hand over from the first virtual cell to the second virtual cell according to the handover command, wherein the transmission resources constituting the second virtual cell comprise a common resource used by a third station and one or more fourth stations to jointly send a same signal to the terminal, and a dedicated resource used by one of the one or more fourth stations and the third station to independently send a signal to the terminal.

21. The apparatus according to any one of claims 16 to 20, wherein the processor is further configured to:
receive, on the common resource by using the transceiver, a target data transmission station indicated by the first station, and receive downlink data at a resource location occupied by the target data transmission station, wherein the target data transmission station is the first station or the second station; or detect downlink scheduling information on the common resource and the dedicated resource, and receive downlink data based on the detected downlink scheduling information at a resource location indicated by the downlink scheduling information; or
detect uplink scheduling information on the common resource and the dedicated resource, and send uplink data based on the detected uplink scheduling information at a resource location indicated by the uplink scheduling information.

22. A communications apparatus, wherein the apparatus is applied to a first station, and the apparatus comprises a transceiver and a processor, wherein the processor is configured to invoke a group of programs, and when the programs are executed, the processor is configured to perform the following operations:
sending, to a terminal by using the transceiver, first resource configuration information of transmission resources allocated to the terminal, wherein the transmission resources comprise a common resource and one or more dedicated resources, the common resource is used by the first station and one or more second stations to jointly send a same signal to the terminal, and the dedicated resource is used by one of the one or more second stations and the first station to independently send a signal to the terminal.

23. The apparatus according to claim 22, wherein the first resource configuration information comprises resource locations of the transmission resources, the common resource, and the one or more dedicated resource, the resource location comprises a time domain location and/or a frequency domain location, the time domain location comprises at least two of a start location, a length, a period, an offset, and an end location in time domain, and the frequency domain location comprises at least two of a start location, a bandwidth, and an end location in frequency domain.

24. The apparatus according to claim 22 or 23, wherein the first resource configuration information comprises L physical cell identifier PCI lists, L is a positive integer, and one station corresponds to one or more PCI lists; and
the processor is further configured to:
receive, by using the transceiver, station signal quality reported by the terminal, wherein the station signal quality is determined based on N pieces of cell signal quality, the N pieces of cell signal quality represent signal quality of N cells in one or more PCI lists corresponding to a station, and N is a positive integer.

25. The apparatus according to any one of claims 22 to 24, wherein the processor is further configured to: after receiving, by using the transceiver, the station signal quality reported by the terminal, determine a target data transmission station of the terminal based on the received station signal quality; and
if the target data transmission station is the first station, send data to the terminal at a specified time domain location; or if the target data transmission station is the second station, instruct the target data transmission station to send data to the terminal at a specified time domain location.

26. The apparatus according to any one of claims 22 to 25, wherein the processor is further configured to:
send a downlink packet data convergence protocol PDCP protocol data unit PDU to the second station by using the transceiver, so that the second station sends the received downlink PDCP PDU to the terminal; or
receive, by using the transceiver, an uplink PDCP PDU of the terminal sent by the second station.

27. The apparatus according to any one of claims 22 to 26, wherein a cell of the first station and a cell of the one or more second stations are comprised in a first virtual cell that serves the terminal, and the processor is further configured to:
when an inter-virtual cell handover condition is met, send a handover command to the terminal by using the transceiver, to instruct the terminal to hand over from the first virtual cell to a second virtual cell, wherein the handover command comprises second resource configuration information of transmission resources constituting the second virtual cell, the transmission resources constituting the second virtual cell comprise a common resource used by a third station and one or more fourth stations to jointly send a same signal to the terminal, and a dedicated resource used by one of the one or more fourth stations and the third station to independently send a signal to the terminal.

28. A computer readable storage medium, wherein the computer storage medium stores a computer readable instruction, and when a computer reads and executes the computer readable instruction, the computer is enabled to perform the methods according to any one of claims 1 to 15.

29. A computer program product, wherein when a computer reads and executes the computer program product, the computer is enabled to perform the methods according to any one of claims 1 to 15.

30. A chip, wherein the chip is connected to a memory, and is configured to read and execute a software program stored in the memory, to implement the methods according to any one of claims 1 to 15.
